# EUROPEAN PATENT APPLICATION

(11) **EP 4 821 982 A1**
(43) Date of publication of application: **14.10.2026**
(21) Application number: 26171647.6
(22) Date of filing: 10.04.2026
(51) Int. Cl.: C08L 23/286

(54) **SHEET, LAMINATED SHEET MATERIAL, INFLATABLE PRODUCT, AND ABOVE-GROUND POOL**

(30) Priority: 11.04.2025 CN 202510462157; 01.08.2025 CN 202521638982 U
(71) Applicant: Bestway Inflatables & Material Corp., Shanghai 201812 (CN)
(72) Inventor: SONG, Qingshui, SHANGHAI, 201812 (CN); CHU, Xiaobo, SHANGHAI, 201812 (CN); YANG, Chun, SHANGHAI, 201812 (CN); ZENG, Xianglin, SHANGHAI, 201812 (CN); YOU, Yihua, SHANGHAI, 201812 (CN); HE, Liang, SHANGHAI, 201812 (CN)
(74) Representative: Biggi, Cristina

(57) **Abstract**

A laminated sheet material includes a reinforcement layer having a first side and a second side, and a polymer layer attached to the first side of the fabric layer. The polymer layer includes a sheet having a mixture of linear low-density polyethylene and chlorinated polyethylene, the mixture being 30-70 parts by weight of the linear low-density polyethylene and 10-70 parts by weight of the chlorinated polyethylene.

## Description

### TECHNICAL FIELD

The present invention relates to a sheet, a laminated sheet material, a laminated material manufacturing method, an inflatable product and an above-ground pool.

### BACKGROUND

Flexible polymer sheet materials are widely used in products that implement lightweight, waterproof, and durable structures, such as flotation devices, inflatable mattresses, inflatable boards, inflatable pools, and above-ground pool liners. These products are typically formed from polymer sheets or laminated materials that are joined together to form sealed chambers capable of containing air or water.

Many conventional inflatable products and pool liners are manufactured using polyvinyl chloride (PVC) materials. PVC films are commonly used because they are relatively easy to process and may be joined using high-frequency welding techniques. As a result, PVC has been widely adopted in the manufacture of inflatable products and flexible water-containing structures.

Although PVC materials are widely used, these materials often require the addition of plasticizers in order to achieve desired flexibility. Plasticizers may gradually migrate from the material during use, which can result in deterioration of mechanical properties over time. In addition, some plasticizers may contain volatile organic compounds (VOCs) that raise environmental and health concerns. Furthermore, PVC materials may also exhibit relatively poor low-temperature performance. For example, under low-temperature conditions, PVC films may become brittle and more susceptible to cracking or fracture. These characteristics can reduce the durability and service life of products formed from PVC materials, particularly when the products are used outdoors or exposed to varying environmental conditions.

In addition to material limitations, conventional laminated sheet structures used in inflatable products and pool liners may have limited resistance to puncture, tearing, or environmental stress. For example, certain laminated materials rely on simple two-layer constructions that may not provide sufficient reinforcement for demanding applications such as inflatable structures or pool liners subjected to internal pressure and mechanical loads.

Accordingly, there remains a need for improved sheet materials that provide enhanced durability, improved low-temperature performance, and reduced environmental concerns when compared with conventional PVC-based materials. There is also a need for improved laminated sheet structures and manufacturing techniques that allow such materials to be incorporated into inflatable products and water-containing structures such as above-ground pools.

### SUMMARY

In the embodiments described herein, it should be appreciated that the implementation of linear low-density polyethylene (LLDPE) may provide greater strength, better toughness, greater rigidity, and better heat/cold resistance than PVC, while also offering enhanced resistance to environmental stress cracking. Furthermore, LLDPE does not require the addition of plasticizers during processing, which avoids contamination of VOCs. Accordingly, it should be understood that LLDPE is healthier and more environmentally friendly than PVC. Moreover, since LLDPE does not contain plasticizers, performance of LLDPE products will not be reduced due to the precipitation of the plasticizers.

Furthermore, as will be described herein, when compared with PVC materials that can be conveniently processed by a high-frequency welding process, LLDPE cannot be processed by high-frequency welding because its molecules are not polarized. As a result, existing production equipment for PVC products cannot be used for production of LLDPE products. The material described herein aims to address these issues by providing a composition that allows for the production of LLDPE products using existing PVC production equipment.

In one aspect, the present invention relates to polymer materials and/or laminated sheet structures suitable for use in inflatable products and/or water-containing structures such as pools. More particularly, the invention relates to polymer compositions, laminated sheet materials formed from such compositions, methods for manufacturing the laminated sheet materials, and products incorporating the laminated sheet materials.

In some embodiments, a polymer composition is provided that includes a mixture of linear low-density polyethylene (LLDPE) and chlorinated polyethylene (CPE). The polymer composition may include about 30-70 parts by weight of the LLDPE and about 10-70 parts by weight of the CPE. In other embodiments, the polymer composition comprises 45 parts by weight of LLDPE and 60 parts by weight of CPE. In some embodiments, the polymer composition may further include one or more additives such as antioxidants, lubricants, fillers, or copolymers. For example, the composition may optionally include ethylene vinyl acetate (EVA) or other polymer modifiers. Polymer modifiers such as EVA can improve processability, welding performance, or mechanical properties.

In another aspect, the invention provides a polymer sheet formed from the polymer composition. The polymer sheet may be produced using various sheet forming processes, including calendering processes, extrusion processes, or other polymer film manufacturing techniques. The resulting sheet may exhibit improved mechanical strength, low-temperature durability, environmental resistance, and welding performance compared with conventional PVC materials.

In another aspect, the invention provides a laminated sheet material including one or more polymer layers formed from the polymer sheet described above. In some embodiments, the laminated sheet material further includes one or more reinforcement layers and/or fabric layers arranged in a multilayer structure. The reinforcement layers may include mesh layers, fiber layers, textile layers, or other reinforcing structures configured to improve tear resistance, puncture resistance, and structural integrity of the laminated sheet material. In some embodiments, adhesive layers may be disposed between adjacent layers to bond the layers together. In some embodiments, the adhesive layer comprises polyurethane.

In some embodiments, the laminated sheet material may include a fabric layer having a first side and a second side, and a polymer layer attached to the fabric layer. In other embodiments, the laminated sheet material may include multiple polymer layers and reinforcement layers arranged in various configurations. For example, the laminated sheet material may include a first polymer layer attached to one side of a reinforcement layer and a second polymer layer attached to an opposite side of the reinforcement layer. In some embodiments, the laminated sheet material may include two fabric layers spaced apart from each other with reinforcement threads or fibers connecting the layers to define a structural cavity therebetween.

In another aspect, the invention provides methods for manufacturing laminated sheet materials. In some embodiments, the method includes preparing a polymer layer from the polymer composition described above, preparing a reinforcement layer such as a fiber layer or mesh layer, applying an adhesive to at least one surface of the reinforcement layer to form an adhesive layer, and attaching the polymer layer to the reinforcement layer using the adhesive layer. In some embodiments, a surface of the polymer layer may be pretreated, such as by corona treatment or other surface treatment, to improve adhesion between layers In some embodiments, the laminated sheet material manufactured with the method of the invention comprises a first reinforcement layer with a plurality of through holes; and the step of applying an adhesive to a surface of the first reinforcement layer to form an adhesive layer is followed by a step of attaching a second reinforcement layer to the first reinforcement layer.

In other embodiments, the step of applying an adhesive to a surface of the first reinforcement layer to form an adhesive layer comprises:
- applying an adhesive on a first side and on a second side of the first reinforcement layer to form a first and a second adhesive layer; and
- covering a surface of the first adhesive layer with a first polymer layer, so that the first polymer layer is attached to the first reinforcement layer; and
covering a surface of the second adhesive layer with a second polymer layer, so that the second polymer layer is attached to the first reinforcement layer.

In another aspect, the laminated sheet material described above may be incorporated into a variety of inflatable products. For example, the laminated sheet material may be used to form inflatable rings, inflatable mattresses, inflatable boards, inflatable toys, inflatable pools, and other inflatable structures. The laminated sheet material may provide improved durability, flexibility, and resistance to environmental stress when compared with conventional materials used for inflatable products.

In another aspect, the invention provides pool assemblies utilizing the laminated sheet material. In some embodiments, an above-ground pool includes a supporting assembly and a pool body defining a water-containing cavity. The pool body may include a pool liner formed from the laminated sheet material described above. The supporting assembly may include a frame structure having vertical support members and horizontal frame members configured to support the pool liner.

The laminated sheet materials described herein may provide several advantages. For example, polymer compositions including LLDPE and CPE may provide improved low-temperature resistance, environmental durability, and mechanical strength compared with conventional PVC materials. Additionally, the laminated sheet structures may improve puncture resistance, tear resistance, and structural stability of inflatable products and pool liners. The materials may also reduce reliance on plasticizers commonly used in PVC materials, thereby improving environmental and health characteristics.

In another aspect, the present invention provides a pool comprising a pool liner which preferably comprises a sidewall and a bottom wall connected to the sidewall to jointly define a water containing cavity. The sidewall comprises the laminated sheet material described above. Furthermore, the sidewall presents an outer side and an inner side: the outer side is formed by the reinforcement layer of the laminated sheet material and the inner side is formed by the first polymer layer of the laminated sheet material. The inner side of the sidewall faces the inside of the water containing cavity.

Furthermore, the pool further comprises a support assembly which comprises a plurality of vertical support rods, each extending in a vertical direction, and a plurality of horizontal rods disposed horizontally and connected end to end in sequence. The plurality of horizontal rods is connected to tops of the plurality of vertical support rods. The sidewall of the pool liner is removably mounted to the plurality of horizontal rods.

Furthermore, the sidewall comprises a material band made of the laminated sheet material. The material band comprises a first end and a second end which are connected one to the other by a connecting strip, such that the material band forms the sidewall.

The connecting strip comprises a connection layer made of a polymer material and connected to the inner side of the sidewall.

The embodiments described herein may be implemented in various combinations. For example, laminated sheet structures described with respect to one embodiment may be incorporated into inflatable products or pool assemblies described with respect to other embodiments. Accordingly, the present disclosure encompasses a wide range of laminated sheet materials, polymer compositions, manufacturing methods, and products incorporating such materials.

### BRIEF DESCRIPTION OF THE DRAWINGS

Other features and advantages of the present disclosure will be understood from the following embodiments described in detail herein and with reference to the accompanying drawings, in which like reference numerals represent the same or similar components.
FIG. 1A schematically depicts a flowchart of a calendering molding process, according to one or more embodiments shown and described herein;
FIG. 1B schematically depicts a flowchart of another embodiment of a calendering molding process, according to one or more embodiments shown and described herein;
FIG. 2A schematically depicts a flowchart of a film casting process, according to one or more embodiments shown and described herein;
FIG. 2B schematically depicts a flowchart of another embodiment of a film casting process, according to one or more embodiments shown and described herein;
FIG. 3A schematically depicts a structural diagram of a laminated material, according to one or more embodiments shown and described herein;
FIG. 3B schematically depicts a structural diagram of another embodiment of a laminated material, according to one or more embodiments shown and described herein;.
FIG. 4A schematically depicts a flowchart of a process of manufacturing a laminated material, according to one or more embodiments shown and described herein;
FIG. 4B schematically depicts a flowchart of another embodiment of a process of manufacturing a laminated material, according to one or more embodiments shown and described herein;
FIG. 5A depicts a schematic structural diagram of a laminated material, according to one or more embodiments shown and described herein;
FIG. 5B depicts a schematic structural diagram of another embodiment of a laminated material, according to one or more embodiments shown and described herein;
FIG. 5C depicts a schematic structural diagram of another embodiment of a laminated material, according to one or more embodiments shown and described herein;
FIG. 5D depicts a schematic structural diagram of another embodiment of a laminated material, according to one or more embodiments shown and described herein;
FIG. 5E depicts a schematic structural diagram of another embodiment of a laminated material, according to one or more embodiments shown and described herein;
FIG. 6 depicts a schematic diagram of a sheet, according to one or more embodiments shown and described herein;
FIG. 7 depicts a schematic structural diagram of the sheet shown in FIG. 6, according to one or more embodiments shown and described herein;
FIG. 8 depicts a schematic diagram of a sheet, according to one or more embodiments shown and described herein;
FIG. 9 depicts a schematic structural diagram of the sheet shown in FIG. 8, according to one or more embodiments shown and described herein;
FIG. 10 depicts a schematic diagram of a sheet, according to one or more embodiments shown and described herein;
FIG. 11 depicts a schematic structural diagram of the sheet shown in FIG. 10, according to one or more embodiments shown and described herein;
FIG. 12A depicts a schematic structural diagram of a swimming ring, according to one or more embodiments shown and described herein;
FIG. 12B depicts a schematic structural diagram of a swimming ring, according to one or more embodiments shown and described herein;
FIG. 13 is a schematic structural diagram of an inflatable mattress, according to one or more embodiments shown and described herein;
FIG. 14 is a schematic structural diagram of a paddle board, according to one or more embodiments shown and described herein;
FIG. 15 is a schematic structural diagram of an inflatable pool, according to one or more embodiments shown and described herein;
FIG. 16 is a schematic structural diagram of an above-ground pool, according to one or more embodiments shown and described herein;
FIG. 17 depicts a perspective view of a pool, according to one or more embodiments shown and described herein;
FIG. 18 depicts a perspective view of a sidewall of a pool liner, according to one or more embodiments shown and described herein;
FIG. 19 depicts a schematic diagram of a material band connected by a connecting strip, according to one or more embodiments shown and described herein;
FIG. 20 depicts a perspective view of a pool liner of the pool shown in FIG. 17, according to one or more embodiments shown and described herein;
FIG. 21 depicts a perspective view of a support assembly of the pool shown in FIG. 17, according to one or more embodiments shown and described herein;
FIG. 22 depicts a perspective view of a pool, according to one or more embodiments shown and described herein;
FIG. 23 depicts a perspective view of a pool liner of the pool shown in FIG. 22, according to one or more embodiments shown and described herein;
FIG. 24 depicts a perspective view of a support assembly of the pool shown in FIG. 22, according to one or more embodiments shown and described herein;
FIG. 25 depicts a perspective view of a plurality of tensioning members of the pool shown in FIG.22, according to one or more embodiments shown and described herein;
FIG. 26 depicts a perspective view of a pool, according to one or more embodiments shown and described herein;
FIG. 27 depicts a perspective view of a pool, according to one or more embodiments shown and described herein;
FIG. 28 depicts a perspective view of a pool liner of the pool shown in FIG. 27, according to one or more embodiments shown and described herein;
FIG. 29 depicts a perspective view of a support assembly of the pool shown in FIG. 27, according to one or more embodiments shown and described herein; and
FIG. 30 depicts a perspective view of a plurality of tensioning members of the pool shown in FIG. 27, according to one or more embodiments shown and described herein.

### DETAILED DESCRIPTION

The present disclosure generally relates to polymer materials and laminated sheet structures that may be used to form durable flexible products. In some embodiments, polymer compositions including mixtures of linear low-density polyethylene (LLDPE), chlorinated polyethylene (CPE), and optionally other polymer modifiers may be processed to form polymer sheets. These polymer sheets may be incorporated into laminated sheet materials including one or more polymer layers, reinforcement layers, fabric layers, and optional adhesive layers arranged in various configurations. The laminated sheet materials may be manufactured using processes such as calendering, extrusion, or lamination techniques described herein. The resulting laminated sheet materials may be incorporated into a variety of products including inflatable structures, flotation devices, inflatable boards, mattresses, inflatable pools, and above-ground pool assemblies. In some embodiments, the laminated sheet materials may form pool liners used in conjunction with supporting frame structures to define water-containing cavities. The following description describes exemplary material compositions, laminated sheet configurations, manufacturing methods, and product implementations utilizing the laminated sheet materials.

Embodiments of the present disclosure are illustrated below, and those skilled in the art may readily understand advantages and effects of the present disclosure from the content disclosed in the description. Although the description of the present disclosure will be introduced in conjunction with preferred embodiments, it does not mean that features of the present disclosure are limited to the implementations described herein. On the contrary, an objective of introducing the present disclosure in conjunction with the embodiments described herein is to encompass other options or modifications that may be extended on the basis of the claims of the present disclosure. The following description contains numerous specific details in order to provide deep understanding of the present disclosure. The present disclosure may also be implemented without these details. In addition, in order to avoid confusion of the present disclosure, some specific details will be omitted in the description. It should be noted that the embodiments and the features thereof in the present disclosure can be combined with each other without conflicts.

In the description of the present disclosure, it should be understood that orientation or position relationships indicated by terms such as "center", "longitudinal", "transverse", "length", "width", "thickness", "up", "down", "front", "rear", "left", "right", "vertical", "horizontal", "top", "bottom", "inside", "outside", "clockwise", and "anticlockwise" are based on orientation or position relationships shown in the accompanying drawings and are merely for ease of description of the present disclosure and simplification of the description, rather than indicating or implying that the apparatuses or elements referred to must have a specific orientation or be constructed and operated in a specific orientation, and therefore cannot be construed as limiting the present disclosure.

In addition, terms "first", "second", etc. are merely for the purpose of description, and should not be construed as indicating or implying the relative importance or implicitly indicating the number of technical features indicated. Thus, the features defined with "first" and "second" may explicitly or implicitly include one or more features. In the description of the present disclosure, the meaning of "a plurality of" is two or more, unless specifically defined otherwise.

In the present disclosure, it should also be noted that the terms "arrange", "connected", and "connection" should be understood in a broad sense, unless otherwise explicitly specified and limited. For example, the connection may be a secured connection, a detachable connection, or an integral connection; or may be a mechanical connection or an electrical connection; or may be a direct connection, an indirect connection by means of an intermediate medium, or internal communication between two elements. For those of ordinary skill in the art, the specific meaning of the terms mentioned above in the embodiments should be understood in specific cases.

In the present disclosure, unless otherwise explicitly specified and defined, the first feature being "above" or "below" the second feature may include the first and second features being in direct contact, or may include the first and second features being not in direct contact but coming into contact through another feature between them. In addition, the first feature being "above", "over", and "on" the second feature includes the first feature being directly above and obliquely above the second feature, or simply means that the level of the first feature is higher than that of the second feature. The first feature being "below", "beneath", and "on underside of" the second feature includes the first feature being directly below and obliquely below the second feature, or simply means that the level of the first feature is less than that of the second feature.

Furthermore, in the description of the embodiments, it should be noted that the orientation or position relationships indicated by the terms, such as "upper", "lower", "inner" and "bottom", are based on the orientation or position relationships shown in the drawings or the orientation or position relationships in which a product of the present utility model is customarily placed during use, and are only intended to facilitate description of the present utility model and simplify the description, rather than indicating or implying that the device or element indicated must have a specific orientation or be configured and operated in a specific orientation, and thus cannot be construed as limiting the present utility model.

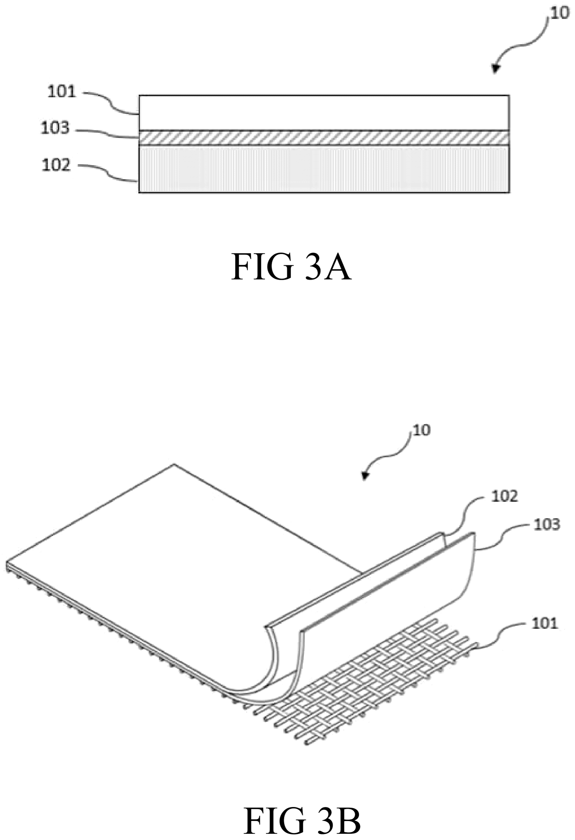

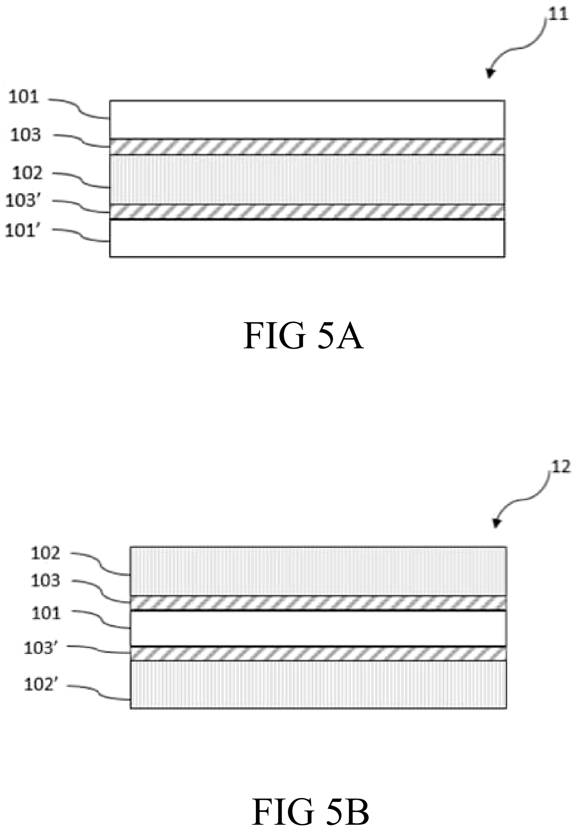

In the description of the present disclosure, the meaning of "a plurality of" is two or more, unless specifically defined otherwise. As used herein, the term "laminated sheet material" or "laminated material" 100 may refer generally to a multilayer sheet structure that includes at least one polymer layer and optionally one or more reinforcement layers, fabric layers, or adhesive layers. The laminated sheet material may be formed from polymer sheets produced according to the material compositions and manufacturing processes described herein. In some embodiments, the laminated sheet material may include a single polymer layer combined with a textile reinforcement layer. In other embodiments, the laminated sheet material may include multiple polymer layers and reinforcement layers arranged in various configurations to achieve desired mechanical strength, flexibility, puncture resistance, and environmental durability. In a particularly preferred embodiment, the "laminated sheet material" is a mesh layer sandwiched between a fabric layer and a polymeric sheet. In some cases, the laminated sheet material 100 is also identified with numbers from 10 to 15 to indicate specific embodiments, as shown in Figures 3A, 3B, 5A - 5E.

As used herein, the term "reinforcement layer" refers generally to a structural layer incorporated into a laminated sheet material to improve mechanical strength. The reinforcement layer may include a mesh layer, fiber layer, woven fabric layer, knitted textile layer, or other reinforcing structure formed from natural or synthetic fibers. In some embodiments, the reinforcement layer may include a mesh structure having a plurality of apertures through which adhesive or polymer material may extend to enhance bonding between adjacent layers.

As used herein, the term "polymer layer or sheet" refers to a sheet or film formed from a polymer material or polymer composition. The polymer layer may be formed from thermoplastic materials such as polyethylene-based materials, chlorinated polyethylene, ethylene copolymers, or other polymer compositions capable of forming flexible sheet structures. In some embodiments, the polymer layer may be produced from the polymer compositions described herein. In other embodiments, the polymer layer may include other thermoplastic materials capable of forming laminated sheet structures.

As used herein, the term "pool assembly" refers to any structure configured to contain a body of water for recreational, sporting, or other uses. In some embodiments, a pool assembly may include a flexible pool liner formed from laminated sheet materials and a supporting structure configured to support the pool liner. The supporting structure may include a frame, rigid panels, tensioning structures, inflatable support members, or other supporting components capable of maintaining the shape of the pool.

As used herein, the term "inflatable product" refers generally to any structure configured to be expanded or maintained by internal fluid pressure, such as air or other gases. Inflatable products may include, for example, inflatable flotation devices, inflatable mattresses, inflatable boards, inflatable pools, inflatable recreational products, inflatable platforms, inflatable containers, or other structures formed from flexible sheet materials. In some embodiments, the inflatable product may include one or more chambers formed from laminated sheet materials as described herein.

To make the objectives, technical solutions, and advantages of the present disclosure clearer, the technical solutions of the present disclosure will be clearly and completely described with reference to specific embodiments of the present disclosure and corresponding figures.

The present disclosure discloses a polymer composition including LLDPE and CPE, where the weight ratio of LLDPE to CPE in the material may be (30-70) : (10-70). For example, when the weight of LLDPE may be considered to be about 30 parts, the weight of CPE may be set to be about 10, 15, 20, 25, 30, 35, 40, 45, 50, 55, 60, 65 or 70 parts; when the weight of LLDPE may be considered to be about 35 parts, the weight of CPE may be set to be about 10, 15, 20, 25, 30, 35, 40, 45, 50, 55, 60, 65 or 70 parts; when the weight of LLDPE may be considered to be about 40 parts, the weight of CPE may be set to be about 10, 15, 20, 25, 30, 35, 40, 45, 50, 55, 60, 65 or 70 parts; when the weight of LLDPE may be considered to be about 45 parts, the weight of CPE may be set to be about 10, 15, 20, 25, 30, 35, 40, 45, 50, 55, 60, 65 or 70 parts; when the weight of LLDPE may be considered to be about 50 parts, the weight of CPE may be set to be about 10, 15, 20, 25, 30, 35, 40, 45, 50, 55, 60, 65 or 70 parts; when the weight of LLDPE may be considered to be about 55 parts, the weight of CPE may be set to be about 10, 15, 20, 25, 30, 35, 40, 45, 50, 55, 60, 65 or 70 parts; when the weight of LLDPE may be considered to be about 60 parts, the weight of CPE may be set to be about 10, 15, 20, 25, 30, 35, 40, 45, 50, 55, 60, 65 or 70 parts; when the weight of LLDPE may be considered to be about 65 parts, the weight of CPE may be set to be about 10, 15, 20, 25, 30, 35, 40, 45, 50, 55, 60, 65 or 70 parts; and when the weight of LLDPE may be considered to be about 70 parts, the weight of CPE may be set to be about 10, 15, 20, 25, 30, 35, 40, 45, 50, 55, 60, 65 or 70 parts.

In some embodiments, the weight ratio of LLDPE to CPE in the above material may be (40-60): (30-60). For example, when the weight of LLDPE may be considered to be about 40 parts, the weight of CPE may be set to be about 30, 35, 40, 45, 50, 55 or 60 parts; when the weight of LLDPE may be considered to be about 45 parts, the weight of CPE may be set to be about 30, 35, 40, 45, 50, 55 or 60 parts; when the weight of LLDPE may be considered to be about 50 parts, the weight of CPE may be set to be about 30, 35, 40, 45, 50, 55 or 60 parts; when the weight of LLDPE may be considered to be about 55 parts, the weight of CPE may be set to be about 30, 35, 40, 45, 50, 55 or 60 parts; and when the weight of LLDPE may be considered to be about 60 parts, the weight of CPE may be set to be about 30, 35, 40, 45, 50, 55 or 60 parts.

In some embodiments, the weight ratio of LLDPE to CPE in the above material may be about 45:60. In some other embodiments, the weight ratio of LLDPE to CPE in the above material may be about 50:50.

Some mixtures of LLDPE and CPE may be used for property testing of the material, and their compositions may be listed in Table 1-1 below.

**Table 1-1**

| No. | CPE | LLDPE | Antioxidant | Lubricant |
|---|---|---|---|---|
| Mixture 1 | 80 parts | 20 parts | 0.5 parts | 0.5 parts |
| Mixture 2 | 70 parts | 30 parts | 0.5 parts | 0.5 parts |
| Mixture 3 | 60 parts | 40 parts | 0.5 parts | 0.5 parts |
| Mixture 4 | 50 parts | 50 parts | 0.5 parts | 0.5 parts |
| Mixture 5 | 40 parts | 60 parts | 0.5 parts | 0.5 parts |
| Mixture 6 | 30 parts | 70 parts | 0.5 parts | 0.5 parts |

Sources of raw materials for the mixtures in Table 1-1 may be as follows: CPE particles: YAXING Chemical 6335; LLDPE particles: Exxon LLDPE 2012MA.

In some embodiments, the sheet satisfies one or more of the following conditions:
the antioxidant is present in an amount of 0-1 part by weight; and/or the lubricant is oleamide; and/or
the lubricant is present in an amount of 0-1 part by weight; and/or
the filler is calcium carbonate nanoparticles; and/or
the filler is present in an amount of 5-25 parts by weight.

The polymer layers described herein may be formed from the polymer compositions disclosed above, including mixtures of LLDPE, CPE, EVA, or other polymer compositions. However, it should be understood that the laminated sheet structures described herein may not be limited to the specific compositions disclosed in the exemplary embodiments. In some embodiments, the polymer layer may include other thermoplastic materials, copolymers, or polymer blends capable of forming flexible sheet structures suitable for lamination, welding, or bonding with reinforcement layers.

As provided herein, the lubricant may be used to improve processing properties of the mixture. The antioxidant in a formula system mainly provides processing stability, and avoids oxidation of the raw materials during processing. The currently known types of antioxidants may all be suitable for the formula system of the present disclosure. Oleamide may be selected as a lubricant for this test.

The welding strength of sheets made from these mixtures (hereinafter referred to as "polymer sheets" or "sheets") may be tested separately. A series of sheet samples with a width of 10 mm and a thickness of 0.30 mm may be obtained, which correspond to mixture 1 to mixture 8, respectively. The sheet manufacturing process will be described in detail below. Based on the same high-frequency welding parameters (welding power: 5 KW, current: 5 A, and welding time: 6 s), the sheet samples corresponding to different mixtures may be welded, and the corresponding welding strength may be tested and listed in Table 1-2 below. Sample 1 to sample 8 may be made from the mixture 1 to the mixture 8, respectively.

**Table 1-2**

| Serial number | CPE/LLDPE | Width/mm | Thickness/mm | Welding strength/N |
|---|---|---|---|---|
| Sample 1 | 80/20 | 10 | 0.3 | 34.3 |
| Sample 2 | 70/30 | 10 | 0.3 | 32.8 |
| Sample 3 | 60/40 | 10 | 0.3 | 29.5 |
| Sample 4 | 50/50 | 10 | 0.3 | 25.2 |
| Sample 5 | 40/60 | 10 | 0.3 | 11.6 |
| Sample 6 | 30/70 | 10 | 0.3 | 0.50 |

Based on test data in Table 1-2, the welding strength of the sheet samples may correlate with the ratio of CPE to LLDPE in the mixtures. For example, as the content of CPE in the mixture decreases relative to LLDPE, the high-frequency welding strength of the samples may deteriorate. The high-frequency welding strength of the samples may deteriorate significantly when the mass ratio of CPE to LLDPE may be less than 40/60. Furthermore, when the mass ratio of CPE to LLDPE may be less than 30/70, the samples cannot be subjected to high-frequency welding.

In order to further verify performances of the above material, the material may be compared with a PVC material. The Shore hardness of a PVC polymer film used for testing may be 85 A, and the formula of its raw materials may be shown in Table 1-3 below.

**Table 1-3**

| Raw materials | 1300#PVC powder | Plasticizer DOTP | Stabilizer | Epoxidized soybean oil |
|---|---|---|---|---|
| | | (Dioctyl terephthalate) | | |
| Components | 63.2 parts | 33.8 parts | 1 part | 2 parts |

According to the above formula, the PVC polymer film may be obtained by extruding, and then the PVC polymer film may be cut in corresponding sizes as samples of the PVC material. At the same time, a number of sheet samples corresponding to the mixture 3 may be prepared for comparison with the samples of the PVC material.

In particular, the PVC material samples may be taken from a PVC material roll with a length of 127 mm, a width of 50 mm and a thickness of 0.3 mm, and the length direction of the PVC material samples may be perpendicular to a winding direction of the PVC material roll. Furthermore, in these embodiments, mixture samples may be taken from a polymer composition roll with a length of 127 mm, a width of 50 mm and a thickness of 0.3 mm, and the length direction of the mixture samples may be perpendicular to a winding direction of the polymer composition roll. A certain number of the two types of samples may be obtained, respectively, and then the two types of samples may be subjected to low-temperature brittleness testing. Testing conditions: freezing the corresponding samples at temperatures of -10°C and - 22°C for 15 min and then observing the number of cracks. If a sample has surface cracks visible to the naked eye at the end of the freezing process, or even breaks directly, then the sample will be evaluated as cracked.

Test results may be shown in Table 1-4 below.

**Table 1-4**

| Material | Temperature/°C | Time/min | Total number of samples | Number of cracks |
|---|---|---|---|---|
| CPE/LLDPE mixture | -10 | 15 | 10 | 0 |
| PVC | -10 | 15 | 10 | 0 |
| CPE/LLDPE mixture | -22 | 15 | 10 | 0 |
| PVC | -22 | 15 | 10 | 10 |

According to Table 1-4, the CPE/LLDPE polymer sheet has low temperature stability superior to the PVC polymer film.

The tensile modulus of the PVC polymer films and the polymer sheets in the above formula may also be tested. For example, as provided herein, both the PVC polymer films and the polymer sheets may be made into samples with a width of 25 mm and a thickness of 0.3 mm, each sample may be tested with an original gauge length of 50 mm, and the speed of a tensile tester may be set to 100 mm/min.

A. Direction parallel to the material roll

**Table 2-1**

| Material | Tensile force corresponding to deformation/N | | | | Maximum tensile force/N | Elongation at break (%) |
|---|---|---|---|---|---|---|
| | 5% | 10% | 30% | 100% | | |
| CPE/LLDPE Mixture | 8.9 | 14.2 | 24.3 | 41.7 | 123.97 | 1164 (maximum stroke unbroken) |
| PVC | 10.38 | 16.38 | 33.71 | 67.17 | 151.33 | 543.78 |

A set of comparative data for the PVC polymer film and the polymer sheet may be shown in Table 2-1. As provided herein, if the tensile modulus of the polymer sheet is tested, the direction of tensile force may be parallel to a winding direction of the polymer composition roll. In other embodiments, if the tensile modulus of the PVC polymer film is tested, the direction of tensile force may be parallel to a winding direction of the PVC material roll.

B. Direction perpendicular to the material roll

**Table 2-2**

| Material | Tensile force corresponding to deformation/N | | | | Maximum tensile force/N | Elongation at break (%) |
|---|---|---|---|---|---|---|
| | 5% | 10% | 30% | 100% | | |
| CPE/LLDPE Mixture | 7.4 | 12.5 | 21.7 | 36.9 | 73.11 | 1164 (maximum stroke unbroken) |
| PVC | 10.34 | 16.24 | 32.31 | 59.99 | 141.53 | 613.25 |

Another set of comparative data for the PVC polymer film and polymer sheet is shown in Table 2-2. As provided hereinabove, if the tensile modulus of the polymer sheet is tested, the direction of tensile force may be perpendicular to the winding direction of the polymer composition roll. In contrast, if the tensile modulus of the PVC polymer film is tested, the direction of tensile force may be perpendicular to the winding direction of the PVC material roll.

As can be seen from Table 2-1 and Table 2-2, the CPE/LLDPE in the present disclosure may be less susceptible to breakage due to stretching compared with the PVC polymer film.

In some other embodiments, the mixture of LLDPE and CPE further may contain ethylene vinyl acetate copolymer (EVA). The ethylene vinyl acetate copolymer may be 0-70 parts by weight. That may be, the weight ratio of LLDPE, CPE and EVA may be (30-70) : (10-70) : (0-70). In a preferred embodiment EVA is present in an amount comprised between 20 and 70 parts by weight.

Some mixtures of LLDPE, CPE and EVA may be used for property testing of the material, and their compositions may be listed in Table 3-1 below.

**Table 3-1**

| No. | CPE | EVA | LLDPE | Antioxidant | Lubricant |
|---|---|---|---|---|---|
| Mixture 7 | 30 parts | 65 parts | 5 parts | 0.5 parts | 0.5 parts |
| Mixture 8 | 30 parts | 60 parts | 10 parts | 0.5 parts | 0.5 parts |
| Mixture 9 | 30 parts | 50 parts | 20 parts | 0.5 parts | 0.5 parts |
| Mixture 10 | 30 parts | 40 parts | 30 parts | 0.5 parts | 0.5 parts |
| Mixture 11 | 30 parts | 35 parts | 35 parts | 0.5 parts | 0.5 parts |
| Mixture 12 | 30 parts | 30 parts | 40 parts | 0.5 parts | 0.5 parts |
| Mixture 13 | 30 parts | 20 parts | 50 parts | 0.5 parts | 0.5 parts |
| Mixture 14 | 60 parts | 30 parts | 10 parts | 0.5 parts | 0.5 parts |

Sources of raw materials for the mixtures in Table 3-1 may be as follows: EVA particles: Arkema EVA28-03, with vinyl acetate (VA) having a mass percent of 28%; CPE particles: YAXING Chemical 6335; LLDPE particles: Exxon LLDPE 2012MA.

In the embodiments described herein, and as discussed hereinabove, the lubricant may be used to improve processing properties of the mixture. The antioxidant in a formula system mainly provides processing stability and avoids oxidation of the raw materials during processing. The currently known types of antioxidants may each be suitable for the formula system of the present disclosure. Oleamide may be selected as a lubricant for this test.

The welding strength of the sheets from these mixtures may be measured separately. A series of sheet samples with a width of 10 mm and a thickness of 0.30 mm may be obtained, which correspond to mixture 7 to mixture 14, respectively. The sheet manufacturing process will be described in detail below. Based on the same high-frequency welding parameters (welding power: 5 KW, current: 5 A, and welding time: 6 s), the sheet samples corresponding to different mixtures may be welded, and the corresponding welding strength may be tested and listed in Table 3-2 below. Sample 7 to sample 14 may be made from the mixture 7 to the mixture 14, respectively.

**Table 3-2**

| Serial number | CPE/EVA/LLDPE | Width/mm | Thickness/mm | Welding strength/N |
|---|---|---|---|---|
| Sample 7 | 30/65/5 | 10 | 0.3 | 32.6 |
| Sample 8 | 30/60/10 | 10 | 0.3 | 28.9 |
| Sample 9 | 30/50/20 | 10 | 0.3 | 26.1 |
| Sample 10 | 30/40/30 | 10 | 0.3 | 24.0 |
| Sample 11 | 30/35/35 | 10 | 0.3 | 22.5 |
| Sample 12 | 30/30/40 | 10 | 0.3 | 15.3 |
| Sample 13 | 30/20/50 | 10 | 0.3 | 5.3 |
| Sample 14 | 60/30/10 | 10 | 0.3 | 30.2 |

Based on test data in Table 3-2, the welding strength of the sheet samples may correlate with the ratio of CPE, EVA and LLDPE in the mixtures. For example, when the ratio of CPE remains unchanged, as the content of EVA in the mixture decreases relative to LLDPE, the high-frequency welding strength of the samples deteriorates. Accordingly, the deterioration of the high-frequency strength of the sample may cause an increase in the content of EVA in the sheet and may help to improve the welding strength of the sheet.

In order to further verify performances of the above material, the material may be compared with a PVC material. The Shore hardness of a PVC polymer film used for testing may be 85 A, and the formula of its raw materials may be shown in Table 3-3 below.

**Table 3-3**

| Raw materials | 1300#PVC powder | Plasticizer DOTP | Stabilizer | Epoxidized soybean oil |
|---|---|---|---|---|
| | | (Dioctyl terephthalate) | | |
| Components | 63.2 parts | 33.8 parts | 1 part | 2 parts |

According to the above formula, the PVC polymer film may be obtained by extruding, and then the PVC polymer film may be cut into corresponding sizes as samples of the PVC material. At the same time, a number of sheet samples corresponding to the mixture 10 and the mixture 11 may be prepared for comparison with the samples of the PVC material.

In particular, the PVC material samples may be taken from a PVC material roll with a length of 127 mm, a width of 50 mm and a thickness of 0.3 mm, and the length direction of the PVC material samples may be perpendicular to a winding direction of the PVC material roll. Moreover, mixture samples may be taken from a polymer composition roll with a length of 127 mm, a width of 50 mm and a thickness of 0.3 mm, and the length direction of the mixture samples may be perpendicular to a winding direction of the polymer composition roll. A certain number of each type of sample may be obtained respectively, and then each type of sample may be subjected to low-temperature brittleness testing. The testing conditions may include freezing the corresponding samples at temperatures of -10°C and -22°C for 15 min and then observing the number of cracks. If a sample has surface cracks visible to the naked eye at the end of the freezing process, or even breaks directly, then the sample will be evaluated as cracked.

Test results may be shown in Table 3-4 below.

**Table 3-4**

| Material | Temperature/°C | Time/min | Total number of samples | Number of cracks |
|---|---|---|---|---|
| Mixture 10 | -10 | 15 | 10 | 0 |
| PVC | -10 | 15 | 10 | 0 |
| Mixture 10 | -22 | 15 | 10 | 0 |
| PVC | -22 | 15 | 10 | 10 |
| Mixture 11 | -10 | 15 | 10 | 0 |
| PVC | -10 | 15 | 10 | 0 |
| Mixture 11 | -22 | 15 | 10 | 0 |
| PVC | -22 | 15 | 10 | 10 |

According to Table 3-4, the CPE/EVA/LLDPE polymer sheet has low temperature stability superior to the PVC polymer film.

The tensile modulus of the PVC polymer films and the sheets made from the mixture 10 in the above formula may also be tested. For example, and as provided herein, both the PVC polymer films and the sheets made from the mixture 10 may be made into samples with a width of 25 mm and a thickness of 0.3 mm, each sample may be tested with an original gauge length of 50 mm, and the speed of a tensile tester may be set to 100 mm/min.

A. Direction parallel to the material roll

**Table 4-1**

| Material | Tensile force corresponding to deformation/N | | | | Maximum tensile force/N | Elongation at break(%) |
|---|---|---|---|---|---|---|
| | 5% | 10% | 30% | 100% | | |
| Mixture 10 | 8.2 | 13.5 | 23.6 | 39.4 | 105.6 | 1164 (maximum stroke unbroken) |
| PVC | 10.38 | 16.38 | 33.71 | 67.17 | 151.33 | 543.78 |

A set of comparative data for the PVC polymer film and the polymer sheet is shown in Table 4-1. In these embodiments, if the tensile modulus of the polymer sheet is tested, the direction of tensile force may be parallel to a winding direction of the polymer composition roll. In contrast, if the tensile modulus of the PVC polymer film is tested, the direction of tensile force may be parallel to a winding direction of the PVC material roll.

B. Direction perpendicular to the material roll

**Table 4-2**

| Material | Tensile force corresponding to deformation/N | | | | Maximum tensile force/N | Elongation at break (%) |
|---|---|---|---|---|---|---|
| | 5% | 10% | 30% | 100% | | |
| Mixture 10 | 7.8 | 12.9 | 21.5 | 37.4 | 78.9 | 1164 (maximum stroke unbroken) |
| PVC | 10.34 | 16.24 | 32.31 | 59.99 | 141.53 | 613.25 |

Another set of comparative data for the PVC polymer film and polymer sheet is shown in Table 4-2. In these embodiments, if the tensile modulus of the polymer sheet is tested, the direction of tensile force may be perpendicular to the winding direction of the polymer composition roll. In contrast, when the tensile modulus of the PVC polymer film is tested, the direction of tensile force may be perpendicular to the winding direction of the PVC material roll.

As can be seen from Table 4-1 and Table 4-2, the mixture in the present disclosure may be less susceptible to breakage due to stretching compared with the PVC polymer film.

The manufacturing process of the sheet in each embodiment of the present disclosure may be described in detail below.

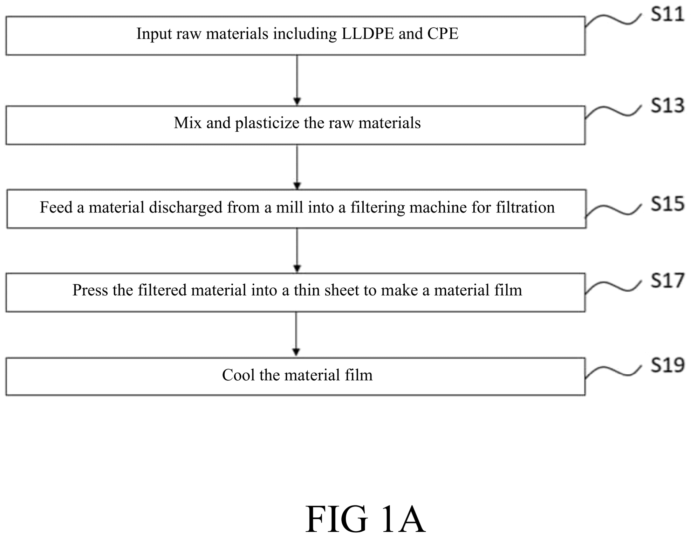

With reference to FIG. 1A, the sheet may be prepared by a calendering molding process. In a typical embodiment, the process may include the following steps:

### S11: Feeding

Raw materials may be input into a production line, the raw materials including LLDPE, CPE, and further including an antioxidant and a lubricant, as shown in Table 1-1 above. The LLDPE and CPE may be initially generally in a powder or granular form. It can be understood that in other embodiments, the raw materials input into the production line further includes an additive to improve properties of the sheet. For example, the raw materials may further include calcium carbonate powder to improve the smoothness of the sheet, and accordingly a product (e.g., inflatable product) made from the sheet has a good touch.

### S13: Plasticizing

The plasticizing step may be used to fully mix the raw materials to form a material with a certain fluidity, which will subsequently be further processed into a sheet.

For example, in some embodiments, the step of plasticizing may include two sub-steps. First, the raw materials described above may be squeezed and sheared by means of an internal mixer, and this process lasts for a certain period of time (e.g., about 120 seconds). During this process, the raw materials may be mixed while molecules of the raw materials rub against each other to generate heat, so that the raw materials may be plasticized to a certain extent. The raw materials may be plasticized by the internal mixer into a viscous bulk material which may be then discharged from the internal mixer.

Subsequently, the bulk material discharged from the internal mixer may be fed into a mill. The bulk material may be further plasticized by further shearing and squeezing through the mill. In a typical embodiment, the mill may be provided with two opposing rollers, and the material may be squeezed as it passes through a gap between the two rollers. In some embodiments, the two rollers may be rotated in opposite directions and rotated at different speeds, and this setup may enhance the shearing effect on the material. The heat generated by the molecules of the material rubbing against each other during the milling process may serve to preserve heat for the material, and the mill may heat the material to prevent the material being cooled or solidified. Herein, there may be one or more mills.

For example, the production line may be provided with two mills, namely, mill A and mill B (not depicted), where the operating temperature of mill A may be set to 70°C, and the temperature of the material when discharged from mill A may be 120°C. The operating temperature of mill B may be set to 50°C, and the temperature of the material when discharged from mill B may be 125°C.

Although the process described herein includes two rollers, it should be further appreciated that the process may include the use of more than two rollers used for squeezing the bulk material in one internal mixer, and these rollers may be arranged in different ways in different embodiments without departing from the scope of the present disclosure

### S15: Filtering

When a material with certain impurities is produced as a sheet (e.g., a very thin sheet), the impurities may form defects on the sheet. In the case that this defective sheet is used in the manufacture of an inflatable product, the inflatable product may break at the points of the defects. In other words, these impurities may cause quality problems in the final product. In order to remove these impurities which may be brought into the material during the manufacturing process, the material from the mill may be fed into a filtering machine for filtration.

Accordingly, in these embodiments, the filtering machine may further squeeze and shear the material for further plasticization of the material, and the filtering machine further heats the material to promote the plasticization of the material. For example, with the operating temperature of the filtering machine set to 93°C and the mesh number (number of meshes in 1 inch) of a filter screen set to 120, the temperature of the filtered material may be about 130°C.

It should be appreciated that, in the embodiments described herein, the operating temperature of the filtering machine and/or the mesh number of the filter screen may be set to other values. It should be further understood that this filtering step may be omitted in other embodiments. For example, in the case that the material discharged from the mill does not contain impurities that would cause quality problems in the final product, the step of filtering may be omitted to increase productivity.

### S17: Calendering

Once the material has been filtered, the filtered material may be fed into a calendering machine. Under the squeezing of the rollers, the material may be stretched into a sheet. Generally, the calendering machine may include at least one pair of rollers between which the material may be squeezed into a sheet, with the thickness of the sheet depending on a gap between the pair of rollers. The pair of rollers may also heat the material such that the reduction of plasticity due to gradual cooling may be avoided. In some embodiments, the calendering machine may be a four-roller calendering machine having four rollers for squeezing the material fed into the calendering machine, and the four rollers include two pairs of rollers, the first pair of rollers having temperatures of R1:105°C, R2:105°C, and the second pair of rollers having temperatures of R3:110°C, R4:105°C, respectively. Furthermore, in these embodiments, the material may pass through the first and second pairs of rollers sequentially to achieve a desired thickness. It can be understood that there may be more or less than two pairs of rollers for squeezing the bulk material in one calendering machine, and these rollers may be arranged in different ways in different embodiments.

In summary, the material passing through the calendering machine may be squeezed into a sheet having the desired thickness.

### S19: Cooling

Once the sheet has been calendared, the sheet may be cooled and prepared for use in subsequent production processes. For example, the sheet output from the calendering machine may be cooled down after passing through cooling rollers at a low temperature, and the cooling rollers may be introduced with a coolant.

In some embodiments, before the step of cooling the sheet may be carried out, the sheet may be embossed so that the anti-slip property of the sheet may be improved. For example, a liquid-silicone wheel may be used to press the surface of the sheet to form a desired embossed pattern. Accordingly, in some embodiments, one or both sides of the sheet may include an embossed pattern. It should be appreciated that the embossed pattern described herein can be applied to all the embodiments of the present disclosure.

Furthermore, in some embodiments, an EPDM wheel may be easily adhered to the sheet, while the liquid-silicone wheel may be more easily separable from the sheet. Accordingly, in these embodiments, the liquid-silicone wheel may be used to reduce adhesion of an embossing wheel to the sheet, thereby improving the production efficiency of the sheet.

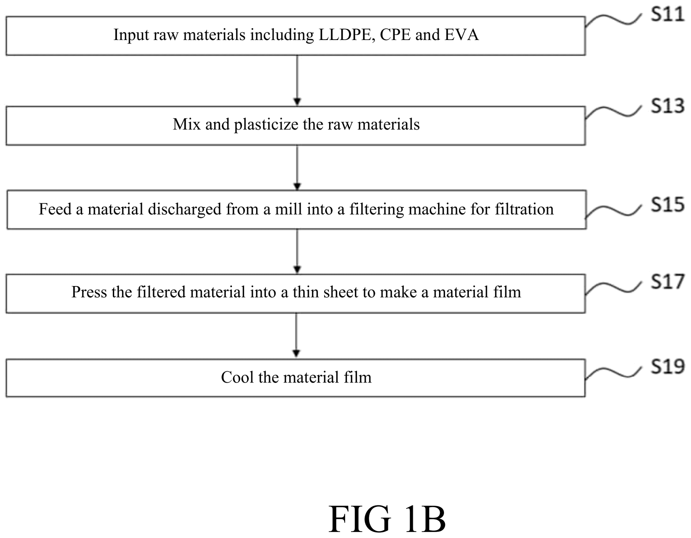

Referring now to FIG. 1B and Table 3-2 above, the raw materials may further include EVA. Accordingly, in step S11, powdered or granular LLDPE and CPE may be put into the production line.

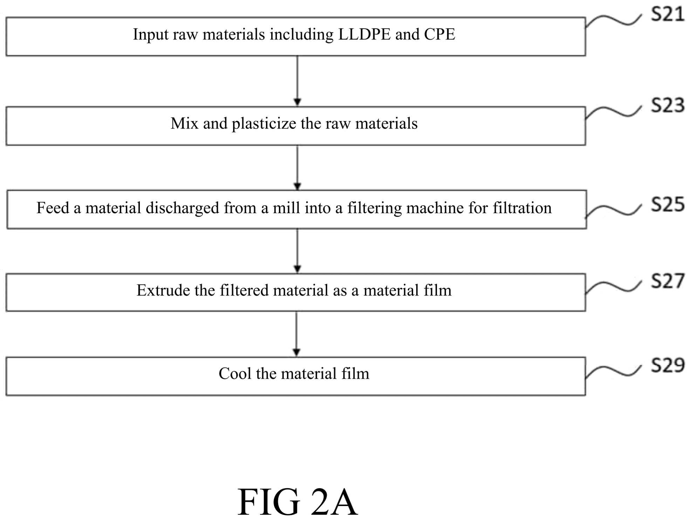

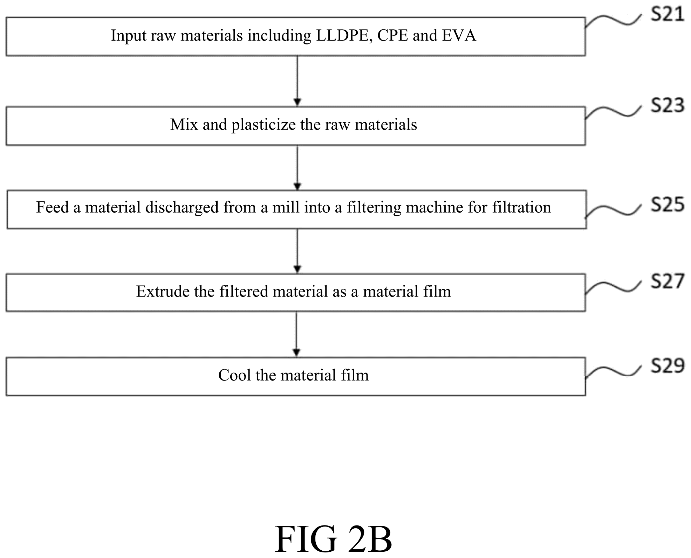

Turning now to FIG. 2A, in some embodiments, the sheet may be prepared by a polymer film casting process, and a polymer film casting method may be implemented by means of a polymer film casting machine. In a typical embodiment, the process may include the following steps: S21: Feeding; S23: Plasticizing; S25: Filtering; S27: Extruding; and S29: Cooling

In the embodiments described herein, steps S21, S23, S25 and S29 may be the same or substantially the same as steps S11, S13, S15 and S19 described above, respectively, and will not be repeated and are incorporated herein by reference. Step S27 differs from step S17 described above in that the material may not be stretched into a sheet through squeezing by the rollers, but the material may be pressurized and fed into a molding die, and then extruded from a narrow slit-like outlet of the molding die. The extruded material may then be subsequently extended and stretched to form a sheet having a desired thickness.

The above describes in detail some methods that may be used for manufacturing the sheet. However, it should be appreciated that these descriptions are merely exemplary in nature, and any methods in which a mixture including LLDPE and CPE in the present disclosure can be made to form a sheet having a desired thickness can be used to produce a sheet suitable for use in various embodiments of the present disclosure.

It should be further appreciated that each of the ratio of CPE to LLDPE and the ratio of CPE, LLDPE and EVA in each embodiment are illustrative in nature, and any desired ratio of materials may be used as necessitated according to various use situations without departing from the scope of the present disclosure. For example, in an embodiment, the mass ratio of CPE to LLDPE may be about 75 to 25.

Based on the above polymer sheet, a laminated material may also be manufactured. For example, since deformation of the sheet when the sheet may be subjected to a tensile force may be limited by an anti-tensile material attached to one or both sides of the polymer sheet, the deformation of the polymer sheet may be controlled within a certain range (e.g., 10%) to maintain its reliability.

The polymer sheet produced according to the processes described above may be incorporated into various laminated sheet structures to improve mechanical strength, puncture resistance, and durability. In some embodiments, the polymer sheet forms one or more layers of a laminated sheet material in combination with reinforcing textile layers and optional adhesive layers. The laminated sheet material may be configured in a variety of layer arrangements depending on the intended disclosure. FIGS. 3A-11 illustrate exemplary laminated sheet structures and manufacturing configurations utilizing the polymer sheet material described above.

With reference to FIGS. 3A and 3B, a laminated sheet material 10 may include a reinforcement layer 101 and a polymer layer 102 laminated to each other. The polymer layer 102 may be made from a mixture containing LLDPE and CPE. For example, the polymer layer 102 may be made of a sheet made from the mixture containing LLDPE and CPE in any of the above embodiments.

The reinforcement layer 101 in each embodiment may be formed from a series of parallel or substantially parallel fibers or threads arranged at the same or different intervals from each other. In other embodiments, the reinforcement layer 101 may also be formed from a planar or three-dimensional fabric material composed of interwoven fibers or threads. For example, the reinforcement layer 101 may be a mesh material or cloth. In some other embodiments, the material of these fibers or threads may be, but may not be limited to, the following synthetic fiber materials: polyethylene terephthalate fibers (PET fibers); polyacrylonitrile fibers (PAN fibers); nylon fibers; ultra-high molecular weight polyethylene fibers (UHMWPEF).

It should be appreciated that these fibers or threads may alternatively be made of other materials (e.g., but not limited to, cotton, etc.).

The reinforcement layer 101 may be woven by a plurality of fibers. For example, the sum of the number of warps and wefts per square inch may be greater than 100, fibers in the warp direction having a different weight per unit length than fibers in the weft direction. It should be understood that, in other embodiments, the sum of the number of warps and wefts per square inch in the reinforcement layer 101 may also be less than 100. It may be appreciated that in some other embodiments, the fibers in the warp direction may have the same weight per unit length as the fibers in the weft direction.

In some embodiments, the reinforcement layer 101 may be provided with apertures (or alternatively referred to as holes) evenly distributed therein. In some embodiments, the reinforcement layer 101 may be composed of crossed synthetic fibers, for example, those synthetic fibers may be selected from the fibers or threads mentioned above. It can be understood that the reinforcement layer 101 may also be made of other materials (e.g., cotton, etc.). The crossed fibers or threads in the reinforcement layer 101 may form the uniformly distributed apertures described above. For example, the reinforcement layer 101 may be formed from a number of interwoven or cross-laminated warp and weft threads, where the warp threads may be disposed parallel to each other, the weft threads may be disposed parallel to each other, and the warp threads and the weft threads may be perpendicular to each other, respectively. It can be understood that in other embodiments, the reinforcement layer 101 may be constructed in other ways from the fibers or threads mentioned above. For example, these fibers or threads may be woven to form the reinforcement layer 101, and the reinforcement layer have apertures that may be substantially circular, hexagonal, or otherwise shaped.

In the embodiments described herein, a mixture including LLDPE and CPE and also EVA, as EVA has a certain polarity, may be suitable for processing in a high-frequency welding manner, and the polarity of the EVA may be provided by a vinyl acetate (VA) group therein, so that the higher the VA content of an EVA, the better the high-frequency welding performance of the polymer layer 102 formed by the mixture of the LLDPE and that EVA. However, it should be understood that excessive VA content may make the EVA (and its mixture with LLDPE) too viscous, and accordingly the polymer layer 102 would be too viscous, which would bring inconvenience to the production of the polymer layer 102. Accordingly, in some embodiments, an EVA with a moderate VA content may be selected to achieve a balance between the ease of production of the polymer layer 102 and the high-frequency welding performance. For example, in some embodiments, the content of VA in the EVA may be controlled between 5% and 40%. Furthermore, in other embodiments, the content of VA in the EVA may be controlled between 10% and 35%.

To ensure that the reinforcement layer 101 and the polymer layer 102 may be tightly bonded, an adhesive layer 103 may be further provided between the reinforcement layer 101 and the polymer layer 102. For example, the reinforcement layer 101 may be first coated with a layer of adhesive, the polymer layer 102 and the reinforcement layer 101 with the adhesive may be heated, the side of the reinforcement layer with the adhesive may be pressed against the polymer layer, and the reinforcement layer and the polymer layer may be pressed, so that the adhesive fills up the gap between the reinforcement layer and the polymer layer to form the adhesive layer. It can be understood that in the embodiments of the present disclosure, in order to attach the reinforcement layer 101 to the polymer layer 102, the adhesive may also be first coated on the polymer layer 102, or be first coated on both the reinforcement layer 101 and the polymer layer 102, and then the adhesive layer 103 may be subsequently formed between the polymer layer 102 and the reinforcement layer 101 that are pressed.

After the polymer layer 102 is attached to the reinforcement layer 101, the polymer layer 102 may be embedded in the apertures distributed in the reinforcement layer 101 so that the polymer layer 102 and the reinforcement layer 101 may be tightly bonded. For example, the thickness of the reinforcement layer 101 embedded in the polymer layer may range from 0.06 mm to 0.1 mm, or the thickness of the reinforcement layer 101 embedded in the polymer layer may be some other value. The thickness of the polymer layer 102 may range from 0.15 mm to 0.9 mm in some embodiments.

In some embodiments, the adhesive may refer to a PU adhesive. For example, the PU adhesive may first be diluted to obtain a low-concentration easy-to-use PU adhesive solution, and a curing agent may be added to facilitate drying and curing. After curing, the solution may be applied to the reinforcement layer 101 and/or the polymer layer 102. Furthermore, in some embodiments, the viscosity of the undiluted PU adhesive may be between 35000 CPS and 100000 CPS.

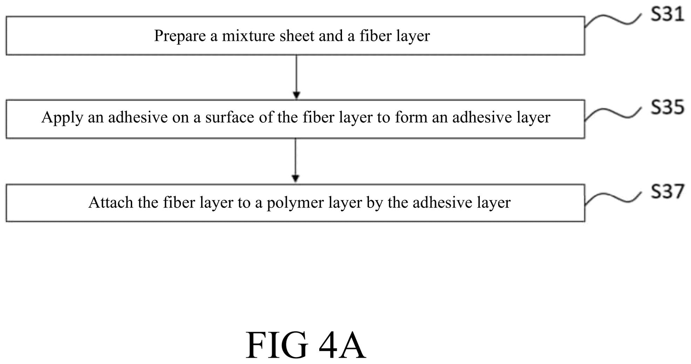

Turning now to FIG. 4A, in some embodiments, the laminated material 10 may be prepared by the following steps:
S31: Prepare a polymer sheet which serves as a polymer layer 102.
S35: Apply an adhesive to a surface of a reinforcement layer 101 (e.g., apply the PU adhesive solution described above), so that the adhesive forms an adhesive layer 103. Optionally, the reinforcement layer may be a fabric material (e.g., oxford cloth).
S37: Attach the reinforcement layer 101 to the polymer layer 102 through the adhesive layer 103. The polymer sheet forms the polymer layer 102 of the laminated material 10, the adhesive (e.g., after the solvent may be volatilized) forms the adhesive layer 103 of the laminated material 10, and the fabric material forms the reinforcement layer 101 of the laminated material 10.

In some embodiments, before step S35, the polymer sheet (i.e., the polymer layer 102) may be unfolded and preheated to promote a tight bonding between the adhesive and the polymer layer 102.

In an embodiment, step S37 may be performed by covering the polymer sheet to the side of the fabric material coated with the adhesive, and then applying a pressure to surfaces of the polymer sheet and the fabric material to firmly bond the two through the adhesive. Furthermore, in some embodiments, the fabric material may be heated and then attached to the polymer sheet to promote a tight bonding between the adhesive and the polymer layer 102.

It should be appreciated that, in the embodiments described herein, the above-mentioned methods for forming the laminated material 10, and the laminated material 10 made by the above-mentioned methods, may be adapted to various embodiments of the present disclosure, respectively.

In general, damage to a surface of the polymer layer should be avoided to ensure its quality. However, in the process of improving the laminated material described above, subjecting the surface of the polymer layer 102 to slight damage may cause the surface of the polymer layer 102 to become rougher than the original state, so that the polymer layer 102 may be in fuller contact with the adhesive. The bond between the adhesive layer and the polymer layer may be therefore stronger than expected.

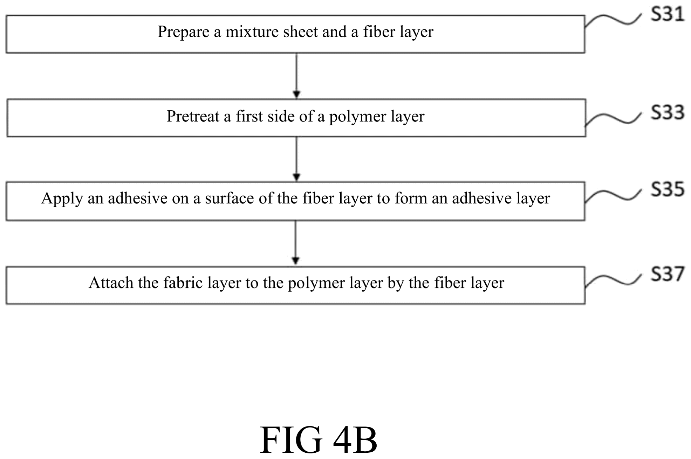

Accordingly, with reference to FIG. 4B, in some embodiments, the following steps may be performed:
S31: Prepare a polymer sheet which serves as a polymer layer 102.
S33: Pretreat a first side of the polymer layer 102 to increase the roughness of the first side.
S35: Apply an adhesive to a surface of a reinforcement layer 101 (e.g., apply the PU adhesive solution described above), so that the adhesive forms an adhesive layer 103. In some embodiments, the reinforcement layer may be a fabric material (e.g., oxford cloth).
S37: Attach the reinforcement layer 101 to the polymer layer 102 through the adhesive layer 103. The polymer sheet may form the polymer layer 102 of the laminated material 10, the adhesive (e.g., after the solvent may be volatilized) may form the adhesive layer 103 of the laminated material 10, and the fabric material may form the reinforcement layer 101 of the laminated material 10.

Furthermore, in some embodiments, pretreatment may be performed by corona treatment. In these embodiments, corona treatment may refer to an electric shock treatment that allows the surface of a polymer composition polymer film to exhibit higher adhesion. Since LLDPE is a non-polar polymer with low surface tension, existing adhesive may be difficult to adhere securely to a surface of an LLDPE material. A certain amount of polar material (e.g., CPE) may be already present in the polymer layer 102, so that the adhesion of the adhesive to the surface of the polymer layer 102 may be superior to its adhesion to a surface of a pure LLDPE polymer film. In any event, corona treatment on the surface of the polymer layer 102 may still be considered to cause the cleavage of the corresponding chemical bonds and subsequent degradation, thereby further enhancing the adhesion of the adhesive to the surface of the polymer layer 102.

In addition, ozone generated upon discharge may be a strong oxidizing agent, which can oxidize molecules on the surface of the polymer layer 102 to produce strongly polar groups such as carbonyl and peroxide groups, thereby increasing the surface energy of the polymer layer 102, so that the adhesive layer 103 may be more firmly attached to the polymer layer 102. The strong adhesion of the adhesive layer 103 to the surface of the polymer layer 102 may improve the durability of the product made of the laminated material 10.

Furthermore, in some embodiments, the organic solvent may be rapidly volatilized by heating the polymer layer 102.

It should be appreciated that the above-mentioned methods for forming the laminated material 10, and the laminated material 10 made by the above-mentioned methods, may be adapted to various embodiments of the present disclosure, respectively.

The above describes a method of attaching one reinforcement layer 101 to one polymer layer 102. In other embodiments, more than one reinforcement layer 101 may be attached to one polymer layer 102, or one reinforcement layer 101 may be attached to more than one polymer layer 102. It should be further appreciated that the one or more reinforcement layers 101 may be laminated with the one or more polymer layers 102 by means of the one or more adhesive layers 103.

Turning now to FIG. 5A, in some embodiments, two reinforcement layers (101, 101') may be attached to one polymer layer 102 to form a laminated sheet material 11. An adhesive layer 103 may be provided between the reinforcement layer 101 and the polymer layer 102, and an adhesive layer 103' may be provided between the reinforcement layer 101' and the polymer layer 102.

With reference to FIG. 5B, in some embodiments, one reinforcement layer 101 may be attached to two polymer layers (102, 102') to form a laminated sheet material 12. An adhesive layer 103 may be provided between the reinforcement layer 101 and the polymer layer 102, and an adhesive layer 103' may be provided between the reinforcement layer 101 and the polymer layer 102'.

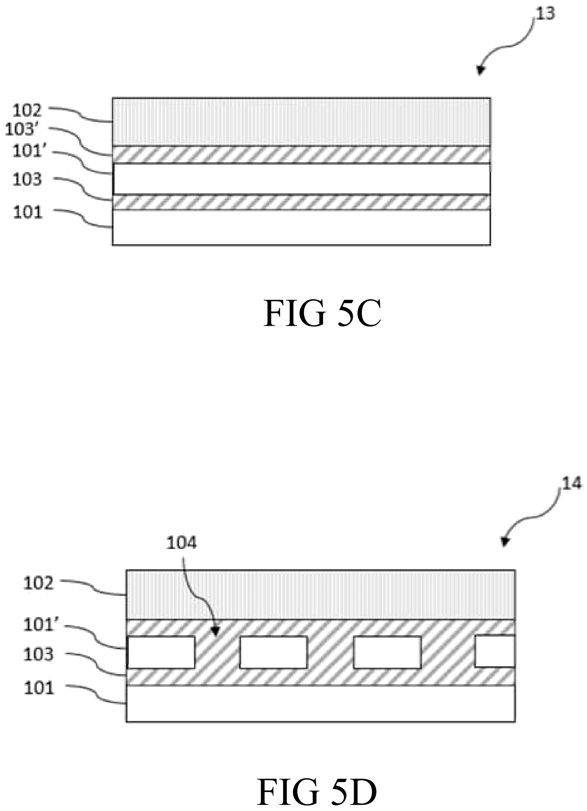

With reference to FIG. 5C, in some embodiments, two reinforcement layers (101, 101') may be attached to one polymer layer 102 to form a laminated sheet material 13, and the two reinforcement layers may be located on the same side of the polymer layer 102. An adhesive layer 103 may be provided between the reinforcement layer 101 and the reinforcement layer 101', and an adhesive layer 103' may be provided between the reinforcement layer 101' and the polymer layer 102.

In an embodiment, the reinforcement layer 101' may be made of natural or man-made fibers (such as, but not limited to, nylon fibers or polyethylene terephthalate (PET) fibers) and have a mesh structure that provides a laminated sheet material 14 with a strong tensile strength; and the reinforcement layer 101 may be a fabric made of natural or man-made fibers, having a more dense structure of the reinforcement layer 101' that provides the laminated sheet material 14 with a strong abrasion resistance.

With reference to FIG. 5D, in some embodiments, two reinforcement layers (101, 101') may be attached to one polymer layer 102 to form a laminated sheet material 14, and the two reinforcement layers may be located on the same side of the polymer layer 102. An adhesive layer 103 may be provided between the reinforcement layer 101 and the polymer layer 102, and the reinforcement layer 101' has a mesh structure and may include a series of apertures or through holes 104. The adhesive may be distributed between the reinforcement layer 101' and the reinforcement layer 101, between the reinforcement layer 101' and the polymer layer 102, and between the apertures or through holes 104 of the reinforcement layer 101', thereby connecting the reinforcement layer 101, the reinforcement layer 101' and the polymer layer 102 together.
In an embodiment, the reinforcement layer 101' may be made of natural or man-made fibers (such as, but not limited to, nylon fibers or polyester fibers) and has a mesh structure that provides the laminated material 14 with a strong tensile strength; and the reinforcement layer 101 may be a fabric made of natural or man-made fibers, having a more dense structure of the reinforcement layer 101' that provides the laminated material 14 with a strong abrasion resistance.

In some other embodiments, the laminated material may have a more complex structure.

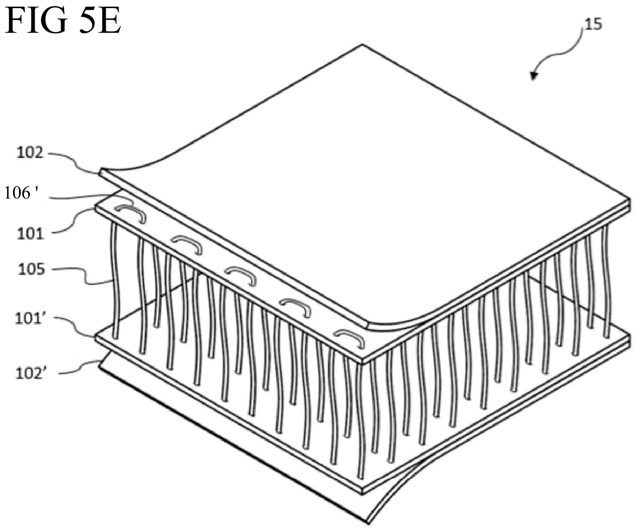

For example, with reference to FIG. 5E, in some embodiments, a laminated sheet material 15 may include a polymer layer 102, a reinforcement layer 101, a reinforcement layer 101', and a polymer layer 102', sequentially. As described herein, the reinforcement layer 101 may be attached to the polymer layer 102 and the reinforcement layer 101' may be attached to the polymer layer 102'. The reinforcement layer 101 and the reinforcement layer 101' may be connected by means of a plurality of threads 105. For clarity, some threads 105 that may be obscured have been omitted from the Figures. These threads 105 limit the distance between the two reinforcement layers 101 and 101' when tensioned. For example, these threads 105 may pass through the two reinforcement layers alternately by sewing and form a plurality of stitches 106' on each of the two reinforcement layers, and the two reinforcement layers 101 and 101' may be pulled by the plurality of stitches 106' when the threads 105 may be tensioned. Furthermore, it should be appreciated that the threads 105 may be fastened to the two reinforcement layers in other ways without departing from the scope of the present disclosure.

In some embodiments, these threads may be made of polyethylene terephthalate (PET) fibers. In other embodiments, the threads may be made of polyethylene, polypropylene, nylon, or other tensile materials.

In some other embodiments, the reinforcement layer 101 and the polymer layer 102 may be laminated to each other by the method in any of the above embodiments, and the reinforcement layer 101' and the polymer layer 102' may be laminated to each other by the method in any of the above embodiments.

The above describes in detail the various laminated materials provided in the present disclosure and the methods for manufacturing the laminated materials.

The laminated materials in the above embodiments can be used to manufacture a wide variety of products. The producer can conveniently choose to join the separated materials together in a high-frequency welding manner or in a heat fusion manner according to the actual situations. In other words, on the basis of the existing high-frequency welding production equipment, the producer can use the polymer sheets or the laminated materials provided in the above embodiments to manufacture inflatable products having higher strength and being more environmentally friendly, but it may not be necessary to purposely update the high-frequency welding equipment to heat fusion production equipment, or vice versa. Thus, the laminated materials and the manufacturing methods thereof disclosed in the present disclosure have a wide range of applications.

In some embodiments, these laminated materials may be used to manufacture inflatable products. For example, the inflatable products may be inflatable furniture such as inflatable mattresses, inflatable pools, inflatable sofas, or inflatable toys such as swimming rings, inflatable castles, or other types of products. Herein, an inflatable product may include at least one inflatable chamber for inflation, and after a pressure of gas (e.g., air) in the inflatable chamber reaches a desired value, the inflatable product may be in an inflated state and maintains a certain shape. After the gas in the inflatable chamber of the inflatable product may be discharged, the inflatable product may be in a deflated state, and the volume of the inflatable product may be greatly reduced relative to that of the inflatable product the inflated state, thereby facilitating storage of the inflatable product.

For a swimming ring or other inflatable product having a simple structure, a closed chamber may be formed by bending a single piece of laminated material and sealing, which may serve as an inflatable chamber for the inflatable product. For an inflatable product having a more complex structure, a closed chamber may be formed by connecting the laminated materials, which may serve as an inflatable chamber of the inflatable product. In other words, the inflatable chamber of the inflatable product may be made of one piece or several pieces of laminated material. After inflation, the shape of the inflatable chamber of the inflatable product may be maintained only by walls of the inflatable chamber, or may be maintained by the aid of additional internal structures. For example, in some embodiments, the additional internal structure may be one or more tensioning structures located within the inflatable chamber, and the one or more tensioning structures may be connected to one or more walls of the inflatable chamber.

The laminated sheet material 100 described above may be implemented in a variety of structural configurations. In some embodiments, the laminated sheet may include multiple polymer layers, reinforcement layers, and fabric layers arranged to achieve desired flexibility, strength, and environmental resistance. The following figures illustrate additional laminated sheet configurations that may be produced using the polymer compositions and manufacturing techniques described above. These embodiments demonstrate various structural arrangements of polymer layers and reinforcement layers that may be used to form sheet materials suitable for inflatable products and pool liners.

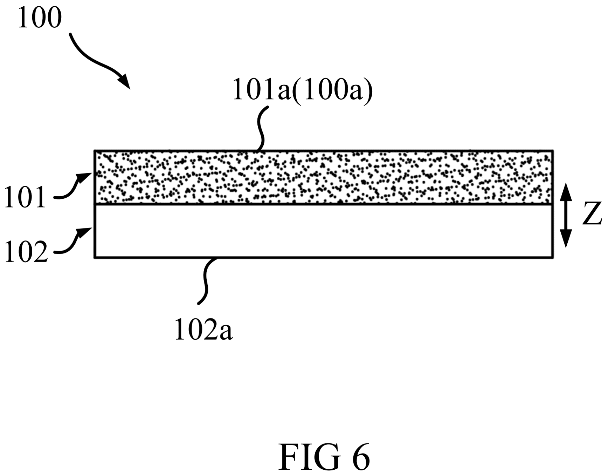

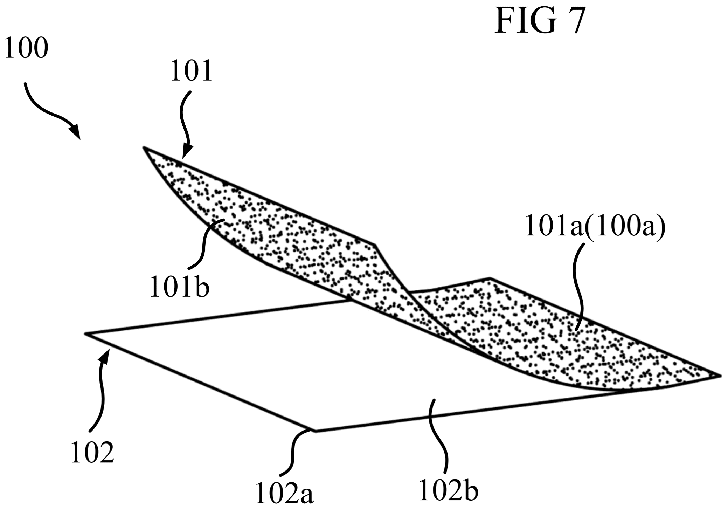

Referring to FIGS. 6 and 7, the laminated sheet material 100 may include a reinforcement layer 101 and a first polymer layer 102 laminated to each other. The reinforcement layer 101 may include a first surface 101a and a second surface 101b disposed oppositely along its thickness direction Z. The first polymer layer 102 may include a first surface 102a and a second surface 102b disposed oppositely along its thickness direction Z.

The second surface 102b of the first polymer layer 102 may be attached to the second surface 101b of the reinforcement layer 101.

The first polymer layer 102 and the reinforcement layer 101 may be firmly bonded by an adhesive. For example, in this embodiment, the adhesive may be two-component polyurethane (PU). It can be understood by those skilled in the art that other types of adhesives may be selected in other embodiments. In some embodiments, for example, the adhesive may be neoprene rubber.

In this embodiment, the reinforcement layer 101 may be made of a fabric material. For example, the fabric material may be made of natural or artificial fibers. For example, the reinforcement layer 101 may be made of a flat fabric or three-dimensional fabric construction composed of interwoven fibers or threads. In some embodiments, the materials of these fibers or threads may be, but may not be limited to, selected from the following fiber materials: cotton fibers; linen fibers; polyethylene terephthalate fibers (PET fibers); polyacrylonitrile fibers (PAN fibers); nylon fibers; ultra-high molecular weight polyethylene fibers (UHMWPEF).

The above fabric materials may be woven by a plurality of fibers. For example, the sum of the number of warps and wefts per square inch may be greater than 100, fibers in the warp direction having a different weight per unit length than fibers in the weft direction. It can be understood that, in other embodiments, the sum of the number of warps and wefts per square inch in the fiber cloth may also be less than 100. It can also be understood that in some embodiments, the fibers in the warp direction may have the same weight per unit length as the fibers in the weft direction.

The above first polymer layer 102 may be made of an organic polymer composition (or a mixture of various organic polymer compositions). For example, the first polymer layer 102 may be made from one or more of polyvinyl chloride (PVC), polyethylene (PE), chlorinated polyethylene (CPE), and thermoplastic polyurethane (TPU).

In one embodiment, the first polymer layer 102 may be made of a mixture of linear low-density polyethylene (LLDPE) and chlorinated polyethylene (CPE). For example, the mixture contains 30-70 parts by weight of linear low-density polyethylene and 10-70 parts by weight of chlorinated polyethylene. Linear low-density polyethylene has advantages such as greater strength, better toughness, greater rigidity, better heat/cold resistance than PVC, and also exhibits good environmental stress crack resistance.

Thus, the laminated sheet material 100 of this embodiment may include two structural layers, including the reinforcement layer 101 and the first polymer layer 102 described above, and the reinforcement layer 101 serves as a first outer surface 100a of the laminated sheet material 100. The reinforcement layer 101 has superior wear resistance over the polymer layer 102. When using the laminated sheet material 100 to manufacture a product (e.g., a pool described later), the first outer surface 100a of the laminated sheet material 100 may be exposed from a side of the product that may be susceptible to scratching (e. g., the first outer surface 100a serves as an outer side of the pool), which can prevent the product from being punctured during carrying and use.

In addition, the above reinforcement layer 101 may be textile. When the product is discarded, the reinforcement layer 101 can be recycled for use in producing a new laminated sheet material 100 or other products, which may be conducive to resource conservation and environmental protection.

In this embodiment, one reinforcement layer 101 may be attached to one first polymer layer 102. However, it should be understood that, in other embodiments, a plurality of reinforcement layers 101 may be attached to one first polymer layer 102, or one reinforcement layer 101 may be attached to a plurality of first polymer layers 102, or a plurality of reinforcement layers 101 may be attached to a plurality of first polymer layers 102.

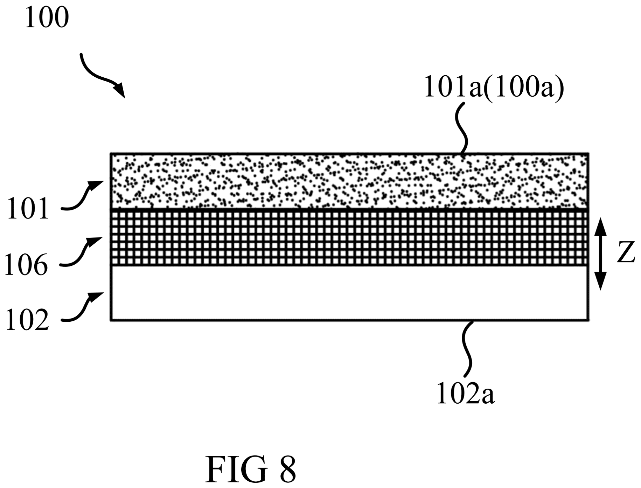

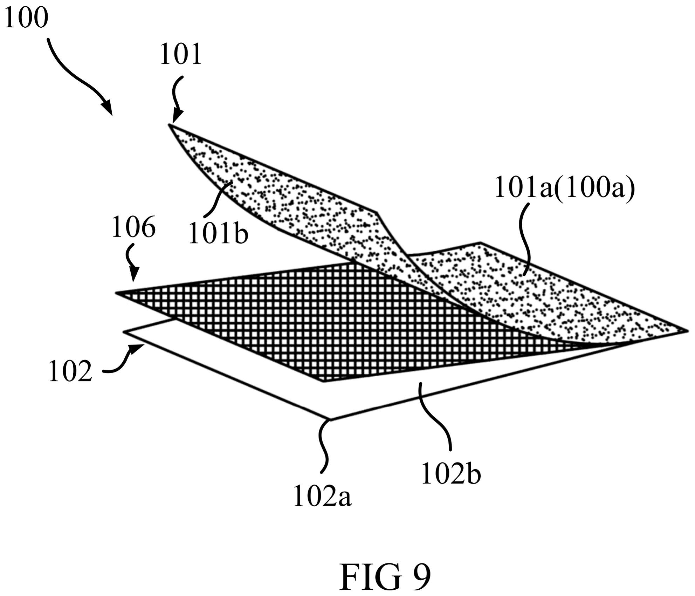

As shown in FIGS. 8 and 9, in one embodiment, a mesh layer 106 may be provided between the reinforcement layer 101 and the first polymer layer 102. The mesh layer 106 may be sandwiched between the second surface 101b of the reinforcement layer 101 and the second surface 102b of the first polymer layer 102 and connect the reinforcement layer 101 and the first polymer layer 102.

In this embodiment, the mesh layer 106 may be made of nylon fibers that may be interwoven to form a nylon mesh. Similar to the reinforcement layer 101 described above, when the product may be discarded, the mesh layer 106 can be recycled for use in producing a new laminated sheet material 100 or other products, which may be conducive to resource conversion and environmental protection. It can be understood that, in other embodiments, the mesh layer 106 may be made of one or more of the above-mentioned fiber materials.

Since the tensile strength of the nylon fibers may be significantly greater than that of the polymer composition, the mesh layer 106 added between the reinforcement layer 101 and the first polymer layer 102 can significantly increase the tensile strength of the laminated sheet material 100. Even when cracks appear in the first polymer layer 102 due to external tension, the nylon fibers of the mesh layer 106 that form a mesh structure can stop crack propagation, thereby improving the tear resistance of the laminated sheet material 100. In addition, the nylon fibers of the mesh layer 106 may be in sufficient contact with the first polymer layer 102 and the reinforcement layer 101 such that the tension applied to the laminated sheet material 100 can be transmitted uniformly to improve the durability of the laminated sheet material 100.

Compared to a single-layer polymer composition, the aforementioned existing laminated material having two polymer films may be significantly improved in terms of tensile strength and durability. However, because the existing laminated material has two polymer composition polymer films, the unit weight of the laminated material may be typically significantly higher than that of the single-layer polymer composition. The laminated sheet material 100 in the above embodiment has only one layer of polymer composition. When the unit weight of the reinforcement layer 101 of the laminated sheet material 100 is less than the unit weight of the polymer film, the weight of the laminated sheet material 100 may be significantly reduced compared to the existing laminated material. Moreover, the reinforcement layer 101 can also achieve the purpose of resistance to puncture and scratch, the product made of the laminated sheet material 100 can be carried and stored more easily and may be more durable compared to the existing product (e.g., a pool). On the other hand, the tensile strength of the reinforcement layer 101 may be greater than that of the polymer film having the same or similar thickness, thus a desirable tensile strength can still be obtained with an appropriate increase in the distance between the fibers (e.g., nylon fibers) of the mesh layer 106 (i.e., with the fibers in the mesh layer 106 being sparser). Accordingly, the cost of the mesh layer 106 can further be reduced as compared to the existing laminated material.

The laminated sheet material 100 in this embodiment has one reinforcement layer 101, one mesh layer 106 and one first polymer layer 102. It can be understood that, in other embodiments, the laminated sheet material 100 may have a plurality of reinforcement layers 101 and/or a plurality of mesh layers 106 and/or a plurality of first polymer layers 102, and the number of reinforcement layers 101, the number of mesh layers 106 and the number of first polymer layers 102 may be the same or different. For example, on the basis of this embodiment, one additional fabric layer may be provided between the mesh layer 106 and the first polymer layer 102, or one additional polymer layer may be provided between the reinforcement layer 101 and the mesh layer 106.

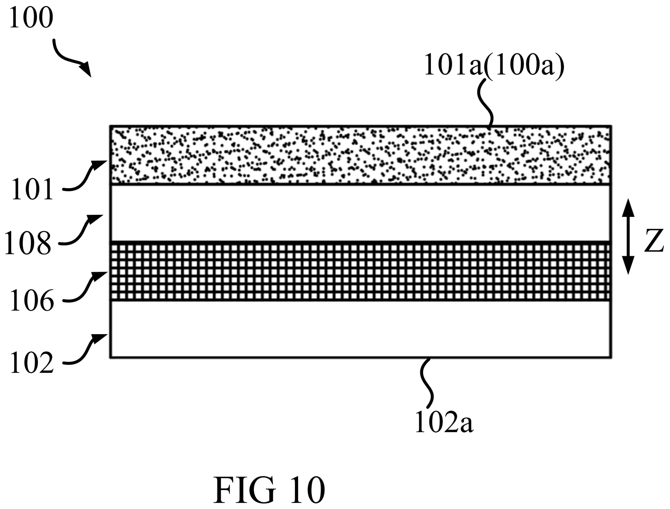

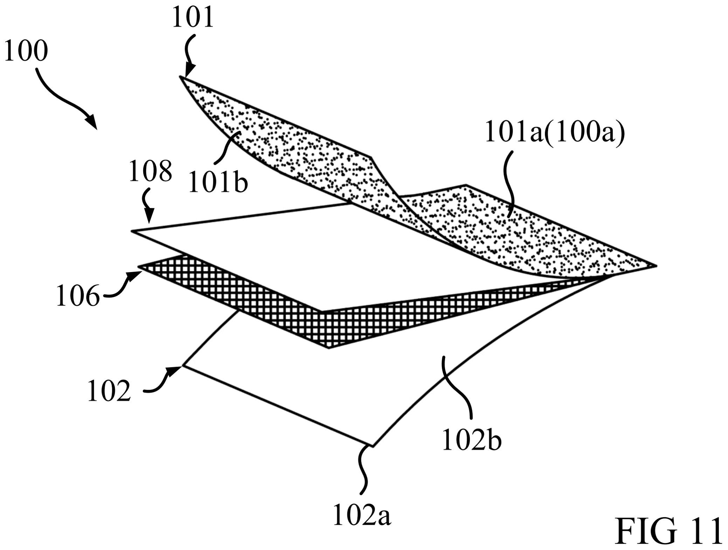

As shown in FIGS. 10 and 11, in one embodiment, a second polymer layer 108 may be provided between the second surface 101b of the reinforcement layer 101 and the mesh layer 106 of the laminated sheet material 100. The second polymer layer 108 may be sandwiched between the reinforcement layer 101 and the mesh layer 106, and the second polymer layer 108 connects the reinforcement layer 101 and the mesh layer 106.

A polymer layer may be provided on each of the two sides of the mesh layer 106 such that the tension in the laminated sheet material 100 may be better distributed on each side of the mesh layer 106, further preventing the detachment of the mesh layer 106 from other parts of the laminated sheet material 100 which could otherwise cause failure of the laminated sheet material 100 .

In this embodiment, the second polymer layer 108 and the first polymer layer 102 may be made of the same material. It can be understood by those skilled in the art that, in other embodiments, the second polymer layer 108 and the first polymer layer 102 may be made of different materials.

The structure of the laminated sheet material 100 provided in the present disclosure is described in detail above. The laminated sheet material 100 in the above embodiments may be used to manufacture a variety of products, such as paddle boards and pools.

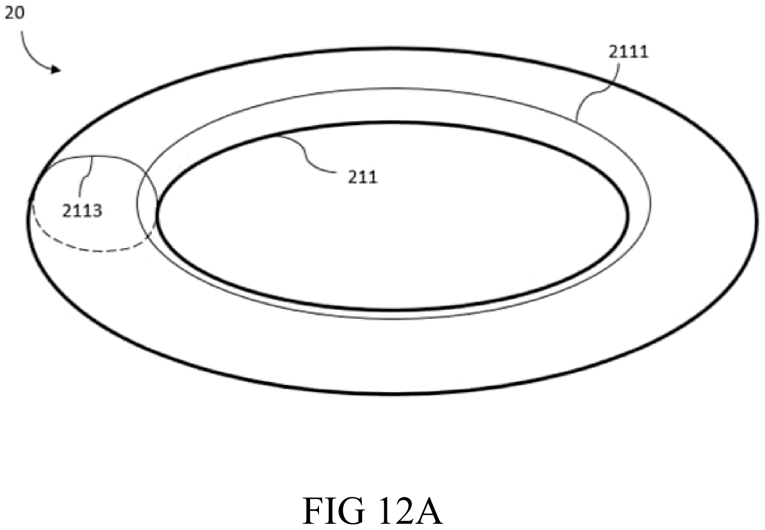

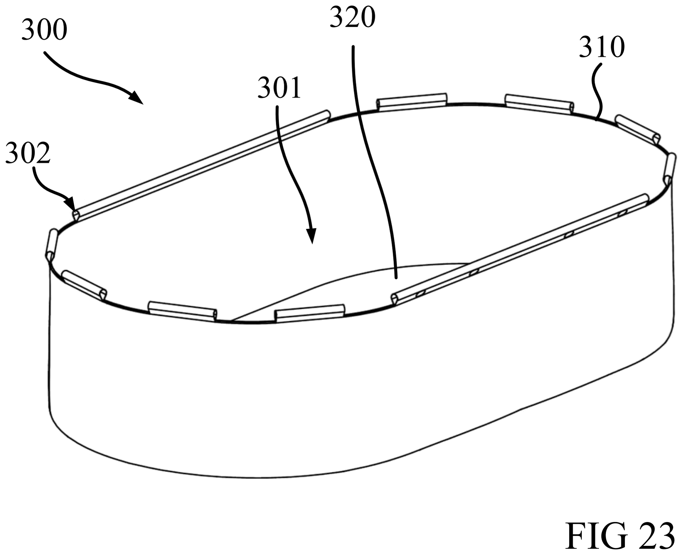

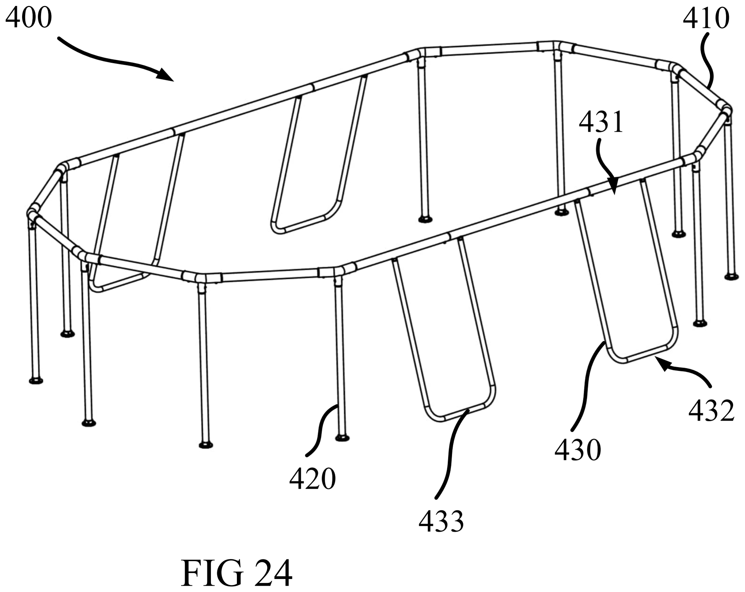

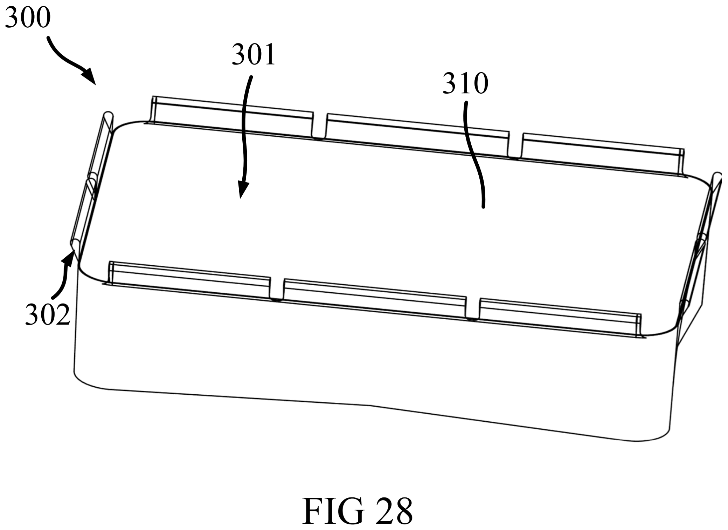

The laminated sheet structures described above may be incorporated into a variety of inflatable products. Due to the improved durability, flexibility, and environmental resistance provided by the polymer compositions and laminated layer configurations, the sheet material may be particularly suitable for inflatable structures that require high mechanical strength and resistance to environmental stress. Examples of such inflatable products include inflatable rings, inflatable mattresses, inflatable boards, inflatable pools, and other similar structures. FIGS. 12A - 30 illustrate representative inflatable products that may be formed using the laminated sheet material described above.

With reference to FIG. 12A, in an embodiment, the inflatable product may be a swimming ring 20. A wall 211 of the swimming ring 20 may be enclosed to form a closed ring and confines an inflatable chamber (not shown) therein. The wall 211 may be made of a single piece of laminated material. For example, firstly, the single piece of laminated material may be rolled into a cylinder and the ends of the laminated material may be joined by heat fusion or high-frequency welding at a weld seam 2111, so that the single piece of laminated material may be made into a pipe with both ends unsealed. Subsequently, the two ends of the pipe may be joined at a weld seam 2113 by heat fusion or high-frequency welding.

It should be further understood that the inflatable product may also be made of two or more pieces of laminated material without departing from the scope of the present disclosure.

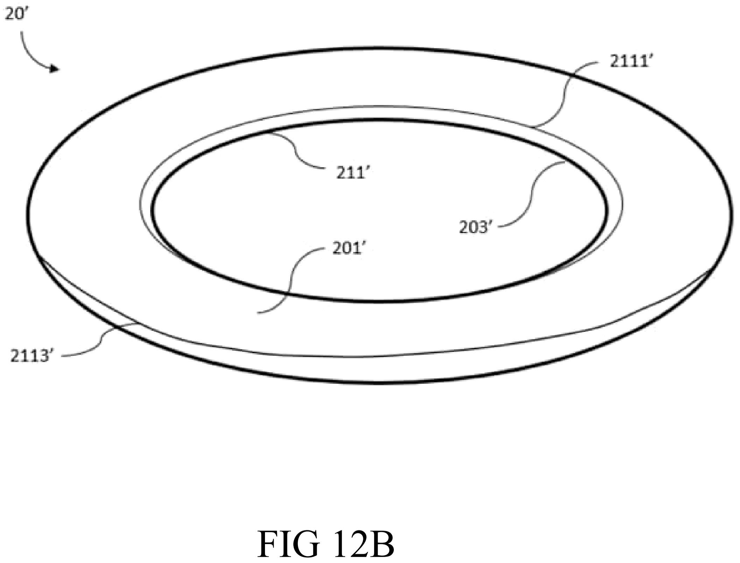

With reference to FIG. 12B, in an embodiment, the inflatable product may be a swimming ring 20'. A wall 211' of the swimming ring 20' may be enclosed to form a closed ring and confines an inflatable chamber (not shown) therein. The swimming ring 20' may be different from the swimming ring 20 shown in FIG. 12A in that the former may be formed by connecting two laminated materials 201' and 203' that may be in a general circular shape. In the embodiments described herein, an inner peripheral edge of the laminated material 201' and an inner peripheral edge of the laminated material 203' may be connected by heat fusion or high-frequency welding, with a weld seam 2111' formed; and an outer peripheral edge of the laminated material 201' and an outer peripheral edge of the laminated material 203' may be connected by heat fusion or high-frequency welding, with a weld seam 2113' formed.

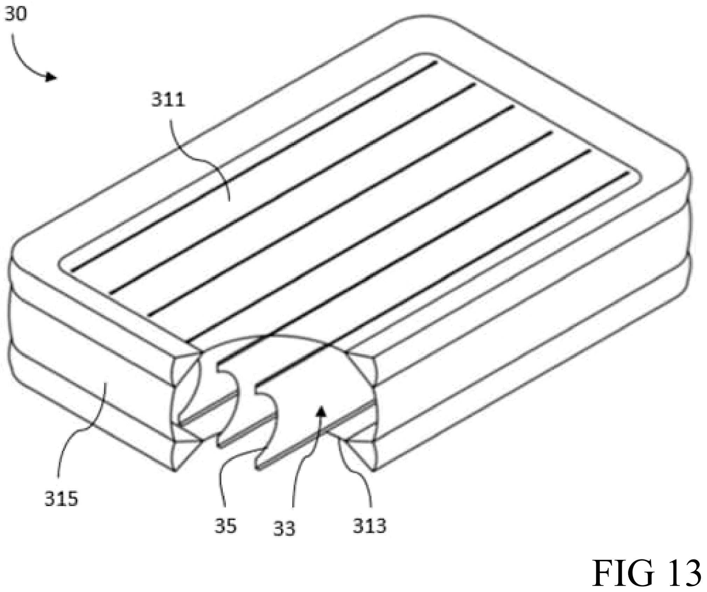

With reference to FIG. 13, in an embodiment, the inflatable product may be an inflatable mattress 30. The inflatable mattress 30 may include an upper wall 311, a lower wall 313, and a sidewall 315, and edges of the upper wall 311 and the lower wall 313 may be welded to upper and lower edges of the sidewall 315, respectively, in a high-frequency welding or heat fusion manner, so that the upper wall 311, the lower wall 313, and the sidewall 315 together may define an inflatable chamber 33. The upper wall 311, the lower wall 313 and the sidewall 315 may be each made of a laminated material as described above.

The structure of the upper wall 311, the lower wall 313 and the sidewall 315 may be the same or substantially the same as the structure of one of the laminated materials shown in FIGS. 3A, 3B, 5A, 5B, 5C or 5D, respectively. The inflatable chamber 33 may be provided with a plurality of tensioning members 35 therein. The tensioning members 35 may be connected to the upper wall 311 and the lower wall 313 of the inflatable mattress 30, respectively, to limit the deformation of the upper wall 311 and the lower wall 313 after the inflatable mattress 30 may be inflated, so that the inflatable mattress 30 maintains a predetermined shape.

In other embodiments, the upper wall 311 and the lower wall 313 may be provided by the laminated material 15 corresponding to the embodiment in FIG. 5E. For example, the laminated material 15 may be cut into the shape of a mattress, the polymer layer 102 and the reinforcement layer 101 forming the upper wall 311, and the polymer layer 102' and the reinforcement layer 101' forming the lower wall 313. In this case, the tensioning member 35 may be omitted, and the plurality of threads 105 limit the deformation of the upper wall 311 and the lower wall 313 after the inflatable mattress 30 may be inflated, so that the inflatable mattress 30 maintains a predetermined shape.

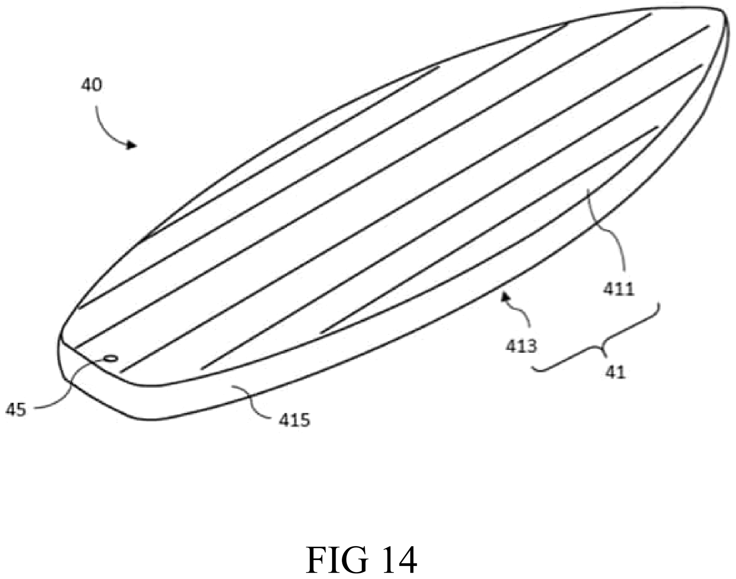

With reference to FIG. 14, in an exemplary embodiment, the inflatable product may be a stand-up paddle board (SUP board) 40. The stand-up paddle board 40 may include a body portion 41 and a lateral confining sheet 415, and the body portion 41 may be provided by the laminated material 15 corresponding to the embodiment of FIG. 5E. For example, the laminated material 15 may be cut into the shape of a stand-up paddle board, with the polymer layer 102 and the polymer layer 102' forming a top surface 411 and a bottom surface 413 of the stand-up paddle board, respectively. The lateral confining sheet 415 may be welded to an edge of the body portion 41 in a high-frequency or heat fusion manner, such that the lateral confining sheet 415 defines an inflatable chamber (not shown) inside the body portion 41. For example, an upper end of the lateral confining sheet 415 may be connected to the polymer layer 102 and a lower end of the lateral confining sheet 415 may be connected to the polymer layer 102'. After inflation, a plurality of threads in the body portion 41 of the stand-up paddle board 40 may be tensioned and provide a tensile force to limit the distance between the two fabric layers of the body portion 41, so that the paddle board 40 maintains a predetermined shape. The stand-up paddle board 40 may further include an inflation inlet 45. The inflation inlet may be provided on the top surface of the stand-up paddle board in FIG. 14.

It should be appreciated that, in some embodiments, the outer side of the laminated material 15 used to form the body portion 41 may additionally be covered with one or more reinforcing layers, and the one or more reinforcing layers form the top and/or bottom surface of the stand-up paddle board.

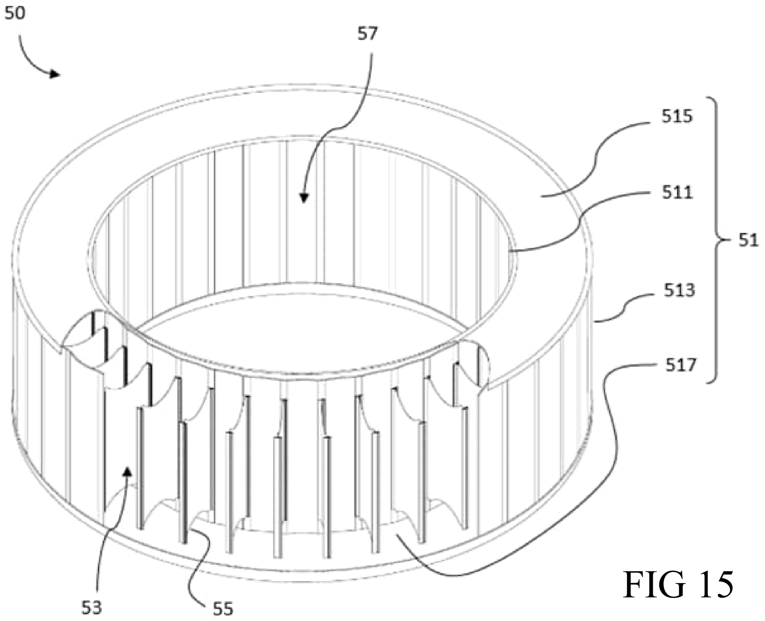

With reference to FIG. 15, in an exemplary embodiment, the inflatable product may be an inflatable pool 50. The inflatable pool 50 may include a pool wall 51. The pool wall 51 may include an inner wall 511 and an outer wall 513, and an inflatable chamber 53 may be defined between the inner wall 511 and the outer wall 513. For example, the pool wall 51 further may include a top wall 515 and a bottom wall 517, the top wall 515 may be connected to the upper ends of the inner wall 511 and the outer wall 513, respectively; the bottom wall 517 may be connected to the lower ends of the inner wall 511 and the outer wall 513, respectively; and the top wall 515, the bottom wall 517, the inner wall 511, and the outer wall 513 may define an inflatable chamber 53. Outside air may pass through air passages (which may be in communication with the inflatable chamber 53 and the outside, respectively, not shown) disposed on the pool wall 51 to enter the inflatable chamber 53, so that the inflatable chamber 53 may be inflated.

The pool wall 51 may be composed entirely of the laminated material in any of the above embodiments. Herein, the structure of the inner wall 511, the outer wall 513, the top wall 515 and the bottom wall 517 may be the same or substantially the same as the structure of one of the laminated materials shown in FIGS. 3A, 3B, 5A, 5B, 5C or 5D, respectively. A plurality of tensioning members 55 may be arranged in the inflatable chamber 53. One end of each tensioning member 55 may be connected to the inner wall 511, and the other end of each tensioning member 55 may be connected to the outer wall 513. The inner wall 511 and the outer wall 513 may be respectively pulled by the tensioning member 55 toward the inflatable chamber 53, so that the pool wall 51 and the inflatable chamber 53 maintain a desired shape. It can be understood that in other embodiments, a part of the pool wall 51 may be composed of one or more of the polymer sheets in the above embodiments, and another part of the pool wall 51 may be composed of one or more of the laminated materials in the above embodiments.

In contrast, in some embodiments, the inner wall 511 and the outer wall 513 may be provided by the laminated material 15 corresponding to the embodiment of FIG. 5E. For example, the laminated material 15 may be cut into a substantially rectangular shape and then connected end to end (e.g., by heat fusion or high-frequency welding) to form a cylinder, the polymer layer 102 and the reinforcement layer 101 forming the inner wall 511, and the polymer layer 102' and the reinforcement layer 101' forming the outer wall 513. In this case, the tensioning member 55 described above may be omitted, and the plurality of threads 105 limit the deformation of the inner wall 511 and the outer wall 513 after the inflatable pool 50 may be inflated, so that the inflatable pool maintains a predetermined shape.

In some embodiments, the inflatable chamber of the inflatable product in any embodiment of the present disclosure may be further provided with a filler which may be enclosed within the inflatable chamber. The filler within the inflatable chamber may be made of an elastic porous material. In some preferred embodiments, the elastic porous material may be one of expandable polyethylene (EPE), sponge, silk cotton, and three-dimensional fabric, or a combination of one or more of these materials. In some cases (e.g., during transportation of the inflatable product), gas (e.g., air) in the inflatable chamber may be withdrawn so that the inflatable chamber (with the filler enclosed therein) may be compressed by outside atmospheric pressure. In other cases (e.g., when a user unfolds the inflatable product and prepares it for use), the inner space of the inflatable chamber may be in communication with the outside atmosphere, and the filler made of the elastic porous material pushes against the walls of the inflatable chamber to unfold them, while the outside air may be sucked inside the inflatable chamber and enters pores of the filler. In this way, the volume of the inflatable product may be greatly reduced after being pumped to facilitate transportation, and after being unfolded, the inflatable product can automatically expand with the help of the filler and draw in air.

It should be appreciated that in some embodiments, the polymer sheet mentioned above may be used to manufacture the inflatable products described above. These inflatable products differ from the inflatable products described above in that part or all of the laminated material used to form the inflatable chamber may be replaced with the polymer sheet. For example, a single polymer sheet may be bent and sealed to form a closed chamber, which may serve as an inflatable chamber of the inflatable product; alternatively, a plurality of polymer sheets may be interconnected to form a closed chamber, which may serve as an inflatable chamber of the inflatable product; alternatively, one or more polymer sheets and one or more pieces of laminated material may be connected to form a closed chamber, which may serve as an inflatable chamber of the inflatable product.

In an exemplary embodiment, the walls of the swimming ring illustrated in FIGS. 12A and/or 12B may be made from one of the polymer sheets described above.

In an embodiment, the upper wall 311, the lower wall 313, and the sidewall 315 of the inflatable mattress 30 illustrated in FIG. 13 may be each made from one or more of the polymer sheets described above. The inflatable chamber 33 may be provided with a plurality of tensioning members 35 therein. The tensioning members 35 may be connected to the upper wall 311 and the lower wall 313 of the inflatable mattress 30, respectively, to limit the deformation of the upper wall 311 and the lower wall 313 after the inflatable mattress 30 may be inflated, so that the inflatable mattress maintains a predetermined shape.

In some embodiments, the top surface 411, the bottom surface 413, and the lateral confining sheet 415 of the stand-up paddle board 40 illustrated in FIG. 14 may be made from one or more of the polymer sheets described above. The top surface 411, the bottom surface 413, and the lateral confining sheet 415 together may define an inflatable chamber (not shown), and a plurality of tensioning members (not shown) may also be provided in the inflatable chamber, which may be connected to the top surface 411 and the bottom surface 413, respectively, to limit the deformation of the top surface 411 and the bottom surface 413 after the stand-up paddle board 40 may be inflated, so that the stand-up paddle board maintains a predetermined shape.

In another embodiment, the pool wall 51 of the inflatable pool 50 illustrated in FIG. 15 may include an inner wall 511 and an outer wall 513, and an inflatable chamber 53 may be defined between the inner wall 511 and the outer wall 513. The pool wall 51 defines a water containing cavity 57, and the water containing cavity 57 can be used for containing water. The pool wall 51 further may include a top wall 515 and a bottom wall 517; the top wall 515 may be connected to the upper ends of the inner wall 511 and the outer wall 513, respectively; the bottom wall 517 may be connected to the lower ends of the inner wall 511 and the outer wall 513, respectively; and the top wall 515, the bottom wall 517, the inner wall 511, and the outer wall 513 may define an inflatable chamber 53. Outside air flows through air passages (which may be in communication with the inflatable chamber 53 and the outside, respectively, not shown) disposed on the pool wall 51 to enter the inflatable chamber 53, so that the inflatable chamber 53 may be inflated. A plurality of tensioning members 55 may be arranged in the inflatable chamber 53. One end of each tensioning member 55 may be connected to the inner wall 511, and the other end of each tensioning member 55 may be connected to the outer wall 513. The inner wall 511 and the outer wall 513 may be respectively pulled by the tensioning member 55 toward the inflatable chamber 53, so that the pool wall 51 and the inflatable chamber 53 maintain a desired shape. It can be understood that in other embodiments, a part of the pool wall 51 may be composed of one or more of the polymer sheets in the above embodiments, and another part of the pool wall 51 may be composed of one or more of the laminated materials in the above embodiments.

The mixture, the polymer sheet and the laminated sheet material 100 disclosed in the present disclosure may also be used to manufacture products other than inflatable products.

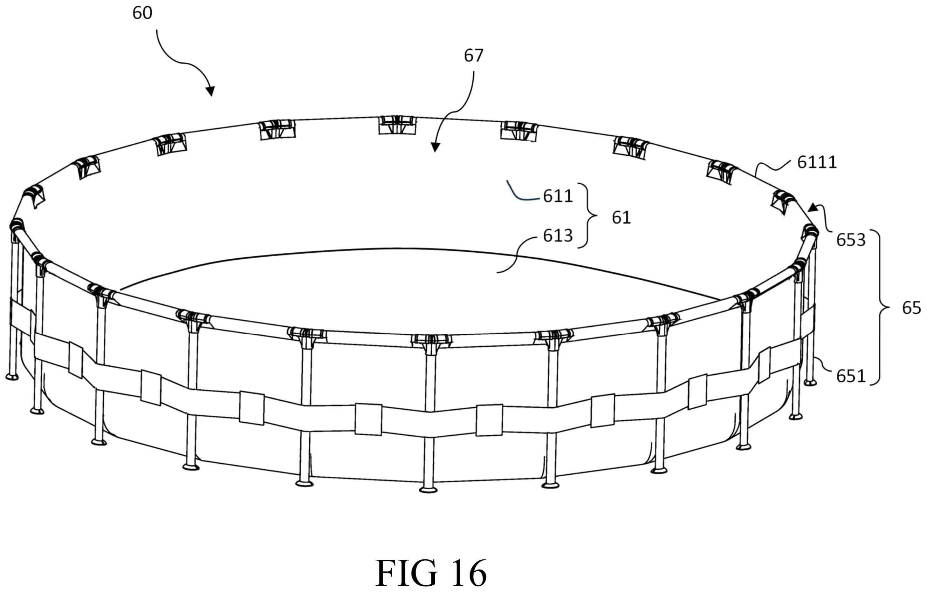

With reference to FIG. 16, in an embodiment, any of the laminated sheet materials in the corresponding embodiments of FIGS. 3A, 3B, 5A, 5B, 5C and 5D described above may be used to manufacture an above-ground pool 60.

The above-ground pool 60, or simply pool 60, may include a pool body 61 (otherwise defined as pool liner) and a supporting assembly 65, the pool body 61 being detachably mounted to the supporting assembly 65. The upper portion of the pool body 61 may be fixed to the upper portion of the supporting assembly 65. The supporting assembly 65 limits the shape of the pool body 61. The pool body 61 defines a water containing cavity 67, and the water containing cavity 67 may be used for containing water. Herein, the supporting assembly 65 may be assembled from a series of rods. For example, the supporting assembly may include a plurality of vertical support rods 651 and a plurality of horizontal rods 653, the plurality of vertical support rods 651 and the plurality of horizontal rods 653 being connected one another to form the supporting assembly 65 in the form of a frame. Each vertical rod 651 may be arranged vertically or substantially vertically, and each horizontal rod 653 may be arranged horizontally or substantially horizontally. The pool body 61 may include a confining sheet 611 and a bottom sheet 613. The confining sheet 611 and the bottom sheet 613, also called respectively sidewall and bottom wall, may be each made of one of the laminated materials described above, and the confining sheet 611 may be connected to the bottom sheet 613 by heat fusion, high-frequency welding, or other optional means. The confining sheet 611 may be hung on the plurality of horizontal rods 653 such that the upper portion of the pool body 61 may be fixed to the upper portion of the supporting assembly 65. For example, the upper portion of the confining sheet 611 may be bent toward the inside or outside of the water containing cavity 67 to form a series of sleeves 6111, and one horizontal rod 653 may pass through each of the sleeves 6111, such that the plurality of horizontal rods 653 hold up the upper portion of the confining sheet 611 through these sleeves 6111. It can be understood that in alternative embodiments, one horizontal rod 653 may pass through a plurality of sleeves 6111, and a plurality of horizontal rods 653 may pass through the same sleeve 6111. The pool body 61 can be conveniently folded and stored after the supporting assembly 65 may be removed. The confining sheet 611 and the bottom sheet 613 may be each made of a single piece of laminated material. For ease of production, the confining sheet 611 and/or the bottom sheet 613 may be formed by connecting two or more pieces of laminated material (e.g., by heat fusion or high-frequency welding).

In other embodiments, the pool body 61 may be constructed from one or more pieces of laminated material in other ways. For example, the pool body 61 may be formed by bending a single piece of laminated material. For another example, the pool body 61 may be formed from two or more pieces of laminated material, but one of the pieces of laminated material used to make the pool body 61 may be a portion of the confining sheet 611 and a portion of the bottom sheet 613.

In other embodiments, some or all of parts in the supporting assembly 65 may be in a form other than rods. For example, some or all of the vertical support rods 651 may be replaced with plate members disposed vertically or substantially vertically, and these plate members may further provide support for the pool body 61 from the sides of the pool body 61. As another example, some or all of the horizontal rods 653 may be omitted.

It should be appreciated that in some embodiments, the polymer sheet mentioned above may be used for manufacturing the above-ground pool 60 described above. This above-ground pool has the same or substantially the same structure as the above-ground pool described above. The difference lies in that part or all of the laminated material of the pool body 61 may be replaced with the polymer sheet. In an optional embodiment, the pool body 61 may be made entirely of one or more of the polymer sheets in the above embodiments. In another optional embodiment, a part of the pool body 61 may be composed of one or more of the polymer sheets in the above embodiments, and another part of the pool body 61 may be composed of one or more of the laminated materials of the above embodiments.

To this end, the present disclosure satisfactorily discloses a material containing the mixture of LLDPE and CPE and applications thereof. This material and its products have low-temperature resistance, weather fastness and durability superior to the PVC material, and may be more environmentally friendly than the PVC material. Moreover, this material may be adapted to both high-frequency welding and heat fusion processing, and accordingly has a wide range of disclosure prospects.

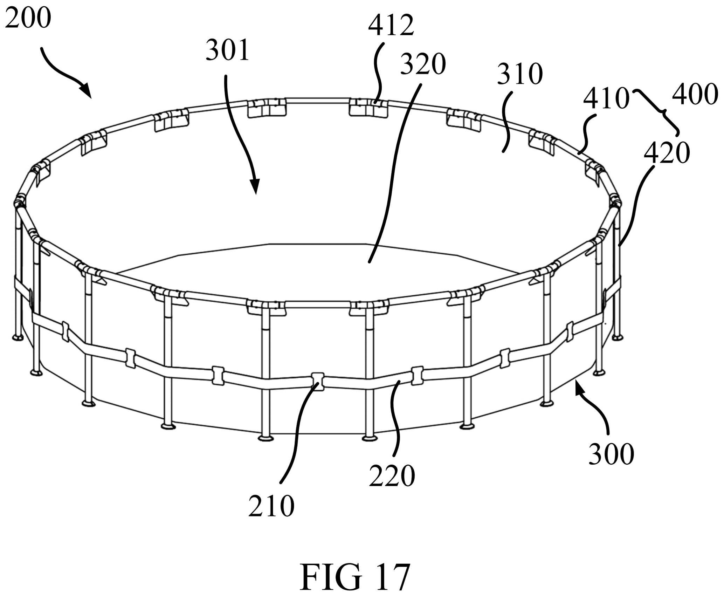

In addition to the inflatable products described above, the laminated sheet material may also be used to form pool liners and other water-containing structures. In particular, the sheet material may be incorporated into above-ground pool assemblies in which a flexible pool liner cooperates with a supporting frame structure to define a water-containing cavity. The improved tear resistance, low-temperature durability, and environmental stability of the laminated sheet material make it well suited for such applications. FIGS. 17-30 illustrate exemplary pool assemblies and pool liner configurations utilizing any of the laminated sheet structures described above.

As shown in FIG. 17, a pool 200 may include a pool liner 300 (otherwise defined as pool body) and a supporting assembly 400. The supporting assembly 400 may be configured to support the pool liner 300. The pool liner 300 may include a sidewall 310 (or confining sheet) and a bottom wall 320 (or bottom sheet). The sidewall 310 may be enclosed a closed ring, and the sidewall 310 and the bottom wall 320 may be connected to each other and jointly may define a water containing cavity 301.

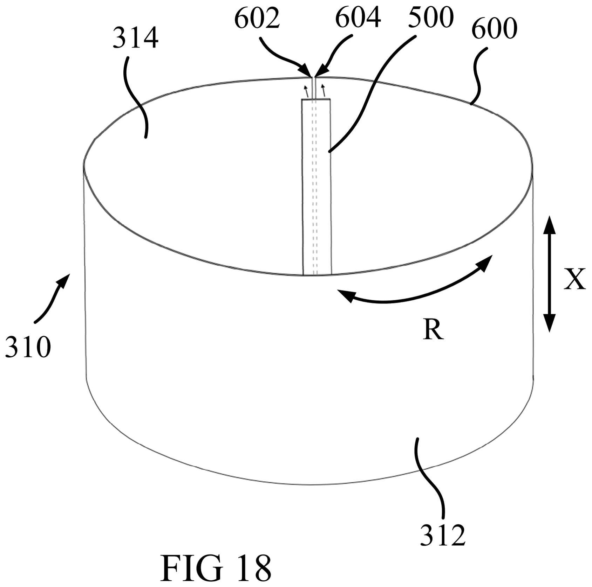

As shown in FIG. 18, the sidewall 310 may be made of the laminated sheet material 100 described above. The sidewall 310 may include an outer side 312 and an inner side 314, where the outer side 312 may be formed from the reinforcement layer 101 of the laminated sheet material 100 described above, and the reinforcement layer 101 has superior wear resistance over the first polymer layer 104, reducing the risk of damage to the sidewall 310. The inner side 314 may be formed from the first polymer layer 102 of the laminated sheet material 100 described above.

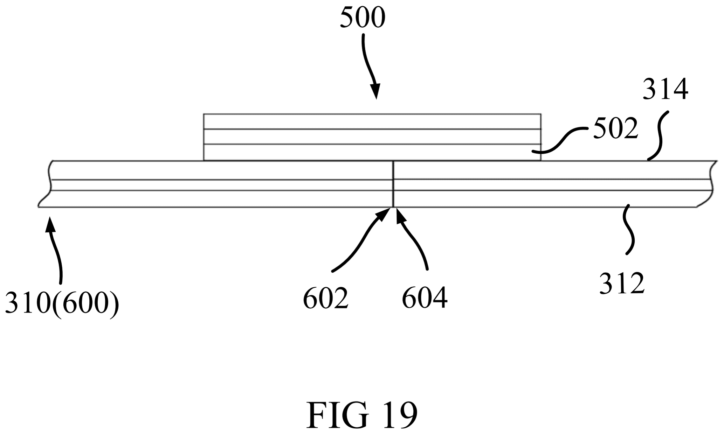

As shown in FIGS. 18 and 19, the sidewall 310 may be made of a rectangular material band 600. The material band 600 may be made of the laminated sheet material 100 described above. A first end 602 and a second end 604 of the rectangular material band 600 may be connected such that the material band 600 forms a closed-ring structure. A connecting strip 500 may be connected to both of the first end 602 and the second end 604 of the material band 600 such that the two ends (i.e., the first end 602 and the second end 604) of the material band 600 may be connected by the connecting strip 500. Optionally, the connecting strip 500 has the same structure as the sidewall 310, for example, the connecting strip 500 may also be made of the laminated sheet material 100 described above. A polymer layer (also referred to as a connection layer) 502 of the connecting strip 500 may be connected to the inner side 314 of the sidewall 310 by high-frequency welding. It can be understood that, in other embodiments, the connecting strip 500 may be joined by gluing, hot melting, or other means.

By way of example, the connecting strip 500 has a length (or, the connecting strip 500 has a width) of about 5 cm in an extension direction (the direction R shown in FIG. 18) of the sidewall 310 of the pool 200. The width of the connecting strip 500 may vary in different embodiments, but the width should be greater than or equal to 3 cm to ensure a reliable connection, by the connecting strip 500, of the first end 602 and the second end 604 of the material band 600 that forms the sidewall 310. The length of the connecting strip 500 in a height direction X of the pool 200 (or the length of the connecting strip 500) may be determined depending on the height of the pool 200.

The connecting strip 500 of this embodiment may also be made of the laminated sheet material 100 described above. It can be understood by those skilled in the art that, in other embodiments, the connecting strip 500 may be made of a material other than the laminated sheet material 100. For example, the connecting strip 500 may alternatively be made of a polymer film, a laminated material (e.g., two polymer films with a layer of mesh material sandwiched therebetween), or other materials. The connecting strip 500 has a surface formed of a polymer composition (e.g., a connecting surface described previously). The surface may be connected to the inner side 314 of the sidewall 310 of the pool 200 by high-frequency welding, gluing, hot melting or other means.

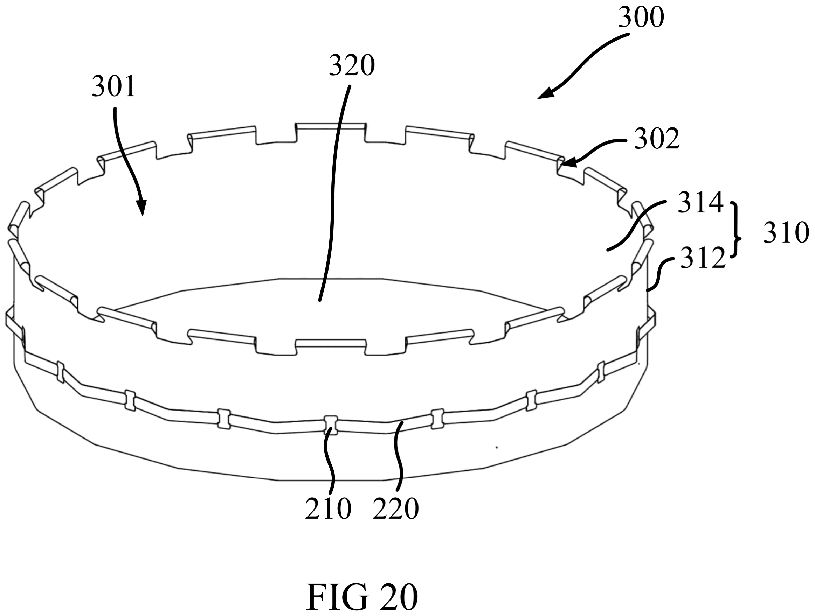

Referring to FIG. 20, the bottom wall 320 of the pool liner 300 may be made of a polymer composition polymer film that may be welded to the inner side 314 of the sidewall 310 (e.g., the material of the bottom wall 320 may be the same as the material of the inner side 314 of the sidewall 310), and the bottom wall 320 may be connected to the inner side 314 of the sidewall 310 by high-frequency welding. It can be understood that in other embodiments, the bottom wall 320 may be made of a material different from that of the inner side 314 of the sidewall 310, or the bottom wall 320 may have other structures, for example, the bottom wall 320 may be made of a laminated material (e.g., two material films with a layer of mesh material sandwiched therebetween).

Referring to FIGS. 17, 20 and 21, the pool liner 300 may be removably mounted to the supporting assembly 400, where an upper portion of the sidewall 310 may be secured to an upper portion of the supporting assembly 400, and the supporting assembly 400 defines the shape of the water containing cavity 301.

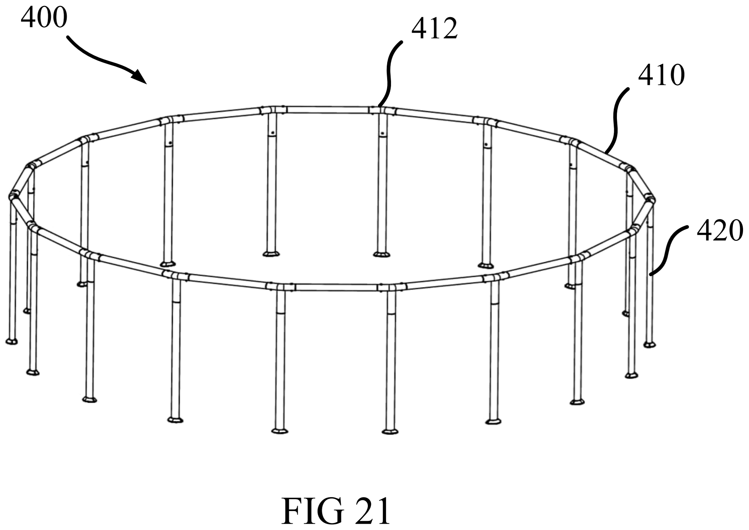

In particular, as shown in FIGS. 17 and 21, the supporting assembly 400 may be assembled from a series of rods, and these rods may be tubes. For example, the supporting assembly 400 may include a plurality of vertical support rods 420 and a plurality of horizontal rods 410. The plurality of vertical support rods 420 and the plurality of horizontal rods 410 may be connected to form the supporting assembly 400 which serves as a frame. Each of the vertical support rods 420 may be arranged vertically or substantially vertically. Each of the horizontal rods 410 may be arranged horizontally or substantially horizontally, and the plurality of horizontal rods 410 may be connected end to end in sequence to form a closed ring. The top of each of the vertical support rods 420 connects two horizontal rods 410 by means of a T-joint 412. The sidewall 310 of the pool liner 300 may be hung on the plurality of horizontal rods 410 such that an upper portion of the pool liner 300 may be secured to the upper portion of the supporting assembly 400.

As shown in FIGS. 20 and 21, the upper portion of the sidewall 310 may be bent toward the inside or outside of the water containing cavity 301 to form a series of sleeves 302 with hollow interiors. One horizontal rod 410 may pass through each of the sleeves 302 such that the plurality of horizontal rods 410 hold up the upper portion of the sidewall 310 by these sleeves 302. It can be understood that in alternative embodiments, one horizontal rod 410 may pass through a plurality of sleeves 302, or a plurality of horizontal rods 410 may pass through one single sleeve 302. The pool liner 300 can be conveniently folded and stored after the supporting assembly 400 may be removed.

Further, as shown in FIGS. 17 and 20, in order to prevent the vertical support rods 420 from accidentally swinging outward and causing the pool liner 300 to collapse, the pool 200 may further include limiting units 210 and a tension strip 220. Each of the limiting units 210 may be secured to the outer side 312 of the sidewall 310, and each of the limiting units 210 may be arranged between two adjacent vertical support rods 420. The tension strip 220 surrounds the sidewall 310 of the pool 200 and sequentially passes between the limiting units 210 and the sidewall 310 of the pool, so that the tension strip 220 may be restricted between the limiting units 210 and the sidewall 310, and the tension strip 220 restricts the vertical support rods 420 between the tension strip 220 and the sidewall 310. Thus, the vertical support rods 420 remain abutting against the surface of the sidewall 310 without accidentally swinging outwardly.

In this embodiment, the limiting units 210 may be connected to the outer side 312 of the sidewall 310 by high-frequency welding. However, it should be understood that, in other embodiments, the limiting units 210 and the outer side 312 of the sidewall 310 may also be connected by gluing, hot melting, or other means without departing from the scope of the present disclosure.

In this embodiment, as shown in FIGS. 17 and 21, the plurality of horizontal rods 410 generally enclose a circle, thereby forming the pool 200 that may be generally circular.

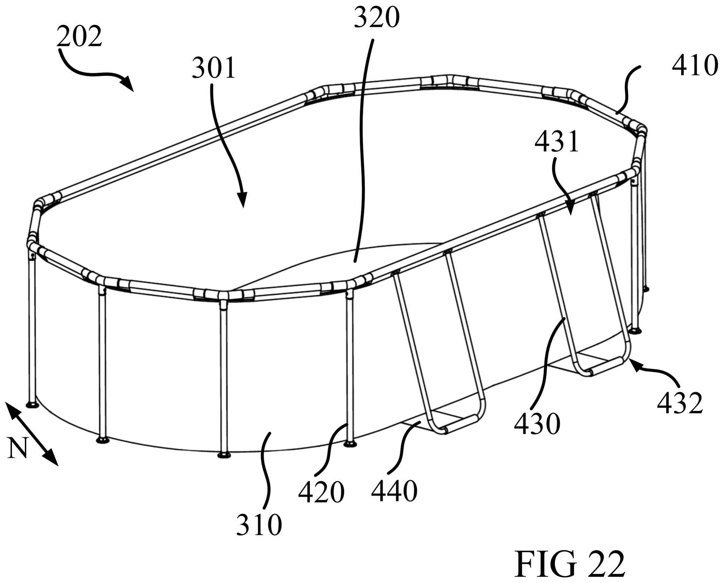

In another embodiment, as shown in FIGS. 22 to 24, the plurality of horizontal rods 410 generally enclose an oval, thereby forming a pool 202 that may be generally oval. The pool 202 has substantially the same structure as the pool 200 shown in FIG. 7, except that the pool 202 in FIG. 22 may be further provided with a plurality of inclined supports 430 symmetrically arranged in a width direction N of the pool 202. An upper end of each of the inclined supports 430 may be connected to at least one horizontal rod 410, and a lower end of the inclined support may be spaced from the sidewall 310 of the pool 202 by a certain distance, so that the inclined supports 430 form acute angles with the vertical support rods 420, for example, the acute angles may be, but may not be limited to, about 15°, 25°, 35°, 45° or 60°. In this way, the inclined supports 430 can prevent the pool 202 from deforming or collapsing under the pressure of water.

In some embodiments, each inclined support 430 may be "U"-shaped, and may include an open end 431 and a closed end 432. Each open end 431 may be connected to one horizontal rod 410, and the closed end 432 may be supported on the ground such that the inclined supports 430 and the vertical support rods 420 together support the horizontal rods 410.

Referring to FIGS. 22, 24 and 25, the closed end 432 of each of the inclined supports 430 may be connected to a bottom wall 320 of the pool liner 300 by a tensioning member 440 such that the position of the inclined support 430 may be limited by the tensioning member 440, and the inclined support 430 may be prevented from slipping outwardly when the water containing cavity 301 of the pool 202 is filled with water, thereby ensuring the stability of the pool 202.

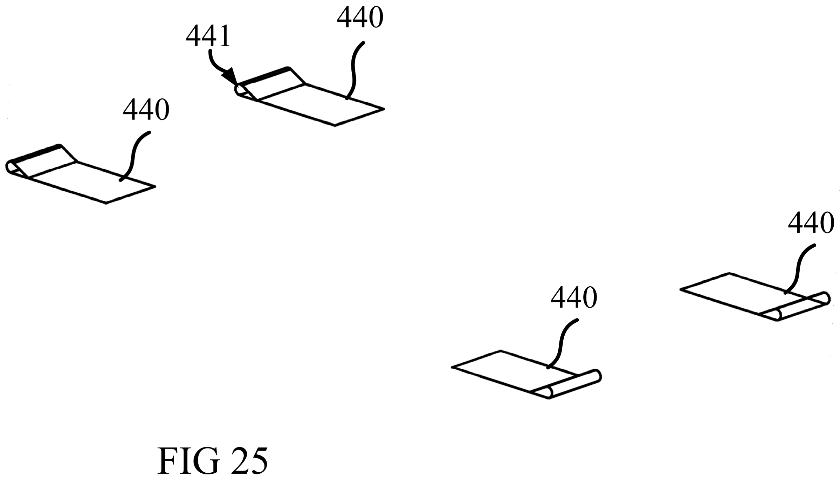

Referring now to FIGS. 22 and 25, a plurality of tensioning members 440 corresponding to the plurality of inclined supports 430 may be plate-like. One end of each of the tensioning members may be bent to form a sleeve 441. The closed end 432 of the inclined support 430 may include a transverse rod 433, and the transverse rod 433 may pass through the sleeve 441 of a corresponding tensioning member 440, forming a connection between the inclined support 430 and the tensioning member 440. The other end of each tensioning member 440 may be connected to the bottom wall 320 of the pool 202, for example, by hot melting, high-frequency welding, or other means.

In this embodiment, two inclined supports 430 may be provided on each of two sides of the pool 202, respectively. However, it should be understood that. in other embodiments, one inclined support 430, or three, four or more inclined supports 430 can be provided on each of two sides of the pool 202, respectively, without departing from the scope of the present disclosure.

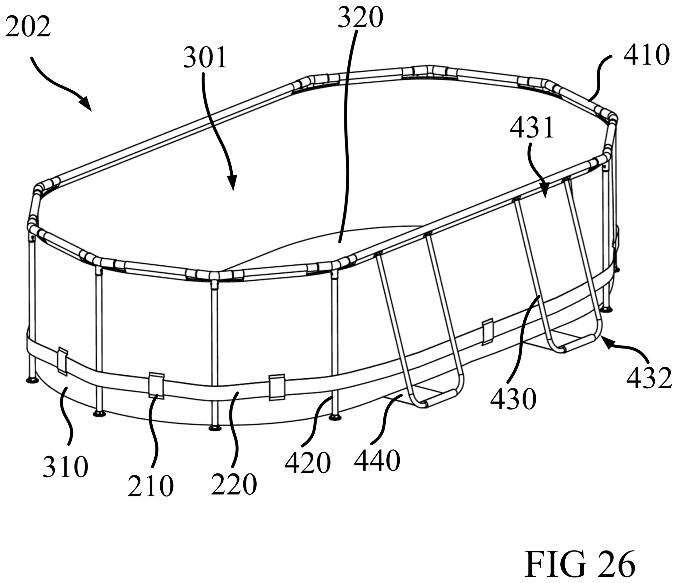

As shown in FIG. 26, limiting units 210 and a tension strip 220 may also be provided in this embodiment.

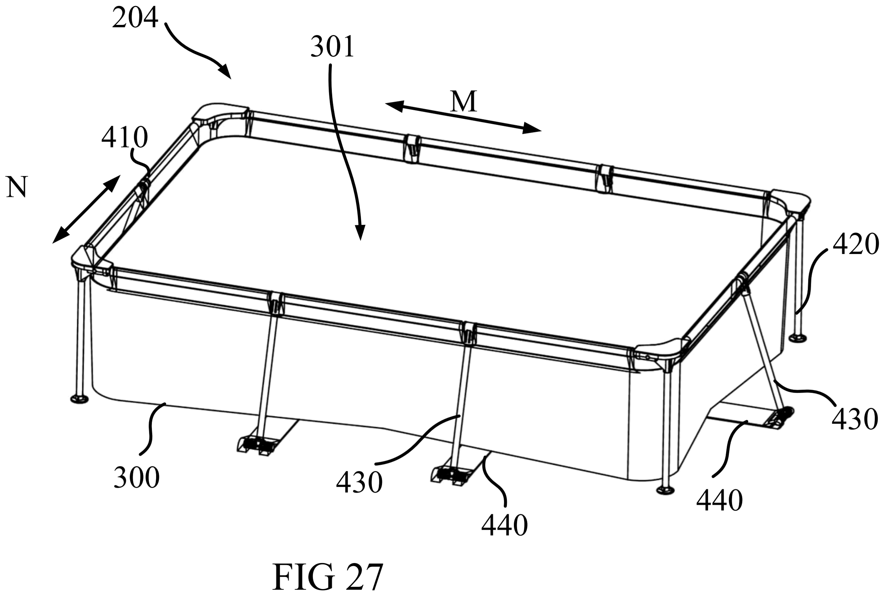

In another embodiment, as shown in FIGS. 27 to 29, a pool 204 may be generally rectangular. A supporting assembly 400 may include a plurality of horizontal rods 410 and a plurality of vertical support rods 420, where the horizontal rods 410 may be connected end to end to form a rectangle.

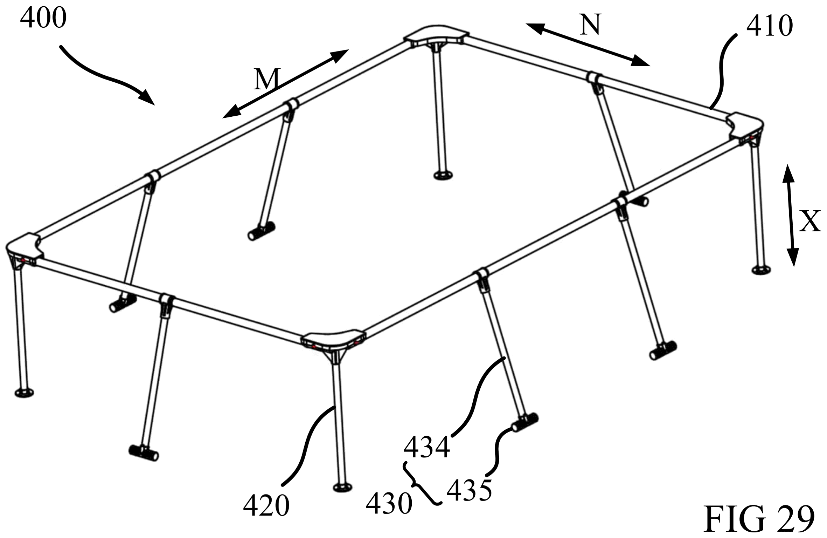

In particular, in this embodiment, as shown in FIG. 29, the supporting assembly 400 may include four horizontal rods 410 and four vertical support rods 420. The four horizontal rods 410 may be connected end to end to form a rectangle, and the four vertical support rods 420 may be located at the junction of two respective connected horizontal rods 410 and extend in a height direction X of the pool 204. An inclined support 430 may be provided between two adjacent vertical support rods 420 in a width direction N and a length direction M of the pool 204. The inclined supports 430 and the vertical support rods 420 may jointly support the horizontal rods 410.

In particular, the inclined support 430 may include a first rod portion 434 and a second rod portion 435 connected vertically, where the first rod portion 434 extends in a direction at an angle to the vertical rod 420, and may be disposed at an acute angle to the vertical rod 420, particularly at an acute angle, for example, of 25° or 30°. An upper end of the first rod portion 434 may be connected to the horizontal rod 410, a lower end of the first rod portion may be connected to the second rod portion 435, and the second rod 435 may be supported by the ground.

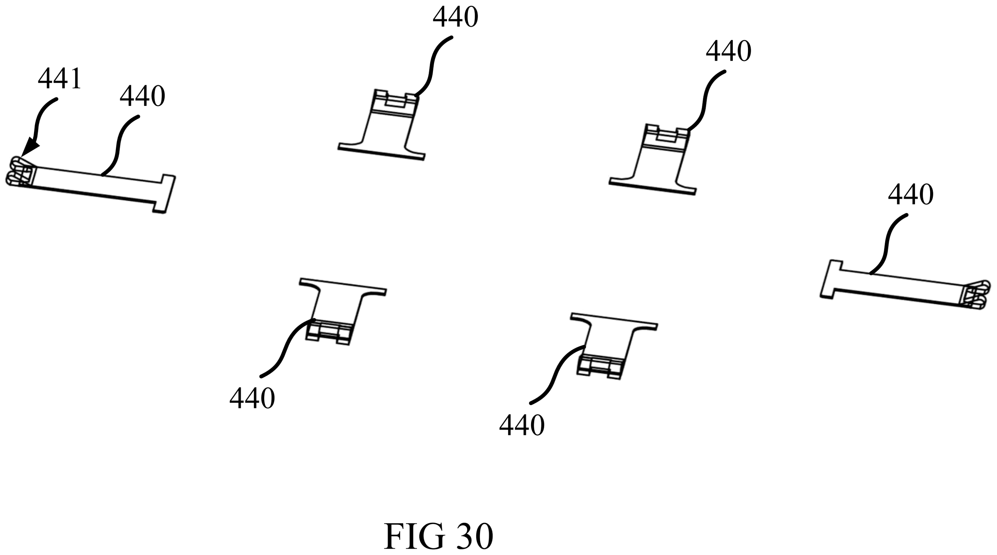

As shown in FIGS. 27 and 30, the pool 204 may include tensioning members 440. The tensioning members 440 each may be plate-like. One end of the tensioning member may be bent to form a sleeve 441, and the second rod portion 435 of the inclined support 430 may pass through the sleeve 441 of a corresponding tensioning member 440 to create a connection between the inclined support 430 and the tensioning member 440. The other end of each tensioning member 440 may be connected to the bottom wall 320 by hot melting, high-frequency welding, or other similar joining means. The position of each of the inclined supports 430 may be restricted by a corresponding tensioning member 440. When the water containing cavity 301 of the pool 204 may be filled with water, the tensioning members 440 prevent the corresponding inclined supports 430 from slipping outwardly.

In some embodiments, such as those depicted in FIG. 30, the tensioning members 440 may be each generally T-shaped. However, it should be appreciated that in other embodiments, the tensioning members 440 may also have other shapes (e.g., but not limited to, rectangle) without departing from the scope of the present disclosure.

In this embodiment, one inclined support 430 may be provided on each of two ends of the pool 204 in the length direction M, and two inclined supports 430 may be provided on each of two ends of the pool 204 in the width direction N. In other embodiments, at each of the two ends of the pool 204 in the length direction M, the inclined supports 430 may be omitted, or two or more inclined supports 430 may be provided. Furthermore, at each of the two ends of the pool 204 in the width direction N, only one inclined support 430 may be provided, or three or more inclined supports 430 may be provided.

The above embodiments illustrate pools in three different shapes (e.g., circle, oval, rectangle) and their corresponding structures. It should be appreciated that the pool in other embodiments may have other shapes without departing from the scope of the present disclosure.

To this end, the present disclosure discloses the structure of the laminated sheet material 100 and applications thereof. The reinforcement layer 101, which may be a fabric layer, of the laminated sheet material 100 being the fiber cloth enables the laminated sheet material 100 and its product to have excellent puncture and scratch resistances and prevents the related product from being punctured during carrying and use. Moreover, since the laminated sheet material 100 has the reinforcement layer 101, the laminated sheet material 100 has superior tear resistance, tension resistance, and durability over the existing polymer film material. In addition, the reinforcement layer 101 and the mesh layer 106 may be recyclable, which may be conducive to resource conservation and environmental protection.

The embodiments described above illustrate various configurations of polymer compositions, laminated sheet materials, inflatable products, and pool structures utilizing the laminated sheet material. It should be understood that the described embodiments are illustrative rather than limiting, and that various modifications, combinations, and alternative configurations may be implemented without departing from the scope of the present disclosure. For example, laminated sheet structures described with respect to one embodiment may be incorporated into inflatable products or pool assemblies described with respect to other embodiments.

The scope of the present disclosure is defined by the appended claims rather than the above-mentioned description, and therefore it is intended that all changes which fall within the meaning and range of equivalents of the claims are embraced in the present disclosure. Any reference signs in the claims should not be construed as limiting the claims involved. In addition, it is apparent that the word "comprise/include" does not exclude other elements or steps, and the singular does not exclude the plural. The terms first, second, etc. are used for designations and do not represent any particular order.

It should be understood that the embodiments as shown in the drawings only show the optional shapes, sizes and arrangements of optional components of the inflatable bed and inflatable products according to the present disclosure, which are merely illustrative but not restrictive, and other shapes, sizes and arrangements may be employed without departing from the idea and scope of the present disclosure.

## Claims

1. A sheet comprising a mixture of linear low-density polyethylene and chlorinated polyethylene, the mixture comprising 30-70 parts by weight of the linear low-density polyethylene and 10-70 parts by weight of the chlorinated polyethylene.

2. The sheet according to claim 1, wherein the mixture comprises:
30-70, preferably 40-60, parts by weight of the linear low-density polyethylene;
10-70, preferably 30-60, parts by weight of the chlorinated polyethylene; and
the mixture further comprises one or more of an antioxidant, a lubricant or a filler.

3. The sheet according to claim 2, wherein the sheet satisfies one or more of the following conditions:
the antioxidant is present in an amount of 0-1 part by weight; and/or
the lubricant is oleamide; and/or
the lubricant is present in an amount of 0-1 part by weight; and/or
the filler is calcium carbonate nanoparticles; and/or
the filler is present in an amount of 5-25 parts by weight.

4. The sheet according to any one of claims 2-3, wherein the mixture comprises, in parts by weight, the following components:
linear low-density polyethylene: 30-70, preferably 40-60 parts;
chlorinated polyethylene: 10-70, preferably 30-60 parts;
antioxidant: 0-1 part; and
lubricant: 0-1 part.

5. The sheet according to any one of claims 1-4, wherein the mixture further comprises an ethylene vinyl acetate copolymer.

6. The sheet according to any one of claims 1-5, wherein the mixture comprises 50 parts by weight of linear low-density polyethylene and 50 parts by weight of chlorinated polyethylene.

7. A laminated sheet material, comprising:
- a reinforcement layer (101, 101') comprising a first side and a second side; and
- a polymer layer (102, 102'), attached to the first side of the reinforcement layer, wherein the polymer layer comprises the sheet according to any one of claims 1-6.

8. The laminated sheet material according to claim 7, further comprising:
an adhesive layer (103, 103') disposed between and connecting the reinforcement layer and the polymer layer.

9. The laminated sheet material according to claim 7 or 8, wherein the reinforcement layer has a mesh structure and comprises a plurality of through holes (104).

10. The laminated sheet material according to claim 9, comprising an adhesive distributed in the plurality of through holes of the reinforcement layer.

11. The laminated sheet material according to any one of claims 7-10, wherein the reinforcement layer is a first reinforcement layer (101) and the laminated sheet material further includes a second reinforcement layer (101') connected to the first reinforcement layer by a plurality of threads that limit a distance between the first reinforcement layer and the second reinforcement layer.

12. A method for manufacturing the laminated sheet material according to any one of claims 7-11, comprising the following steps:
- preparing a polymer layer (102, 102'), the polymer layer comprising a sheet including a mixture of linear low-density polyethylene and chlorinated polyethylene, the mixture comprising 30-70 parts by weight of the linear low-density polyethylene and 10-70 parts by weight of the chlorinated polyethylene;
- preparing a first reinforcement layer (101);
- applying an adhesive to a surface of the first reinforcement layer to form an adhesive layer (103); and
- covering a surface of the adhesive layer with the polymer layer, so that the polymer layer is attached to the reinforcement layer.

13. A pool, **characterized by** comprising:
a pool liner (300) comprising:
a sidewall (310) comprising the laminate sheet material (100) according to any one of claims 8 to 14, the sidewall (310) comprising an outer side (312) and an inner side (314); the outer side (312) of the sidewall (310) being formed by the reinforcement layer (101) of the laminated sheet material (100) and the inner side (314) of the sidewall (310) being formed by the first polymer layer (102) of the laminated sheet material (100); and
a bottom wall (320) connected to the sidewall (310) to jointly define a water containing cavity (301); wherein the inner side (314) of the sidewall (310) facing the inside of the water containing cavity (301).

14. The pool according to the preceding claim, further comprising a support assembly (400), the support assembly comprising:
a plurality of vertical support rods (420) each extending in a vertical direction; and
a plurality of horizontal rods (410) disposed horizontally and connected end to end in sequence, the plurality of horizontal rods (410) being connected to tops of the plurality of vertical support rods (420); wherein the sidewall (310) of the pool liner (300) is removably mounted to the plurality of horizontal rods (400).

15. The pool according to claim 14, wherein the sidewall (310) comprises a material band (600) made of the laminated sheet material (100); the material band (600) comprising a first end (602) and a second end (604) which are connected one to the other by a connecting strip (500) such that the material band (600) forms the sidewall (310).

16. The pool according to claim 15, wherein the connecting strip (500) comprises a connection layer (502) made of a polymer material and connected to the inner side (314) of the sidewall (310).
